# EUROPÄISCHE PATENTSCHRIFT

(11) **EP 1 428 573 B1**
(45) Veröffentlichungstag und Bekanntmachung des Hinweises auf die Patenterteilung: **22.06.2011**
(21) Anmeldenummer: 03027771.9
(22) Anmeldetag: 03.12.2003
(51) Int. Cl.: B01J 19/22, C01B 31/02

(54) **Vorrichtung und Verfahren zum Herstellen von Kohlenstoff-Nanomaterial**
Device and process for the preparation of carbon nanomaterial
Dispositif et procédé de production de nanomatériau en carbone

(30) Priorität: 03.12.2002 DE 10256472; 28.03.2003 DE 10314178
(43) Veröffentlichungstag der Anmeldung: 16.06.2004
(73) Patentinhaber: FutureCarbon GmbH, 95448 Bayreuth (DE)
(72) Erfinder: Schütz, Walter, Dr., 95466 Weidenberg (DE)
(74) Vertreter: Müller, Thomas

(56) Entgegenhaltungen:
- EP-A- 1 445 236
- WO-A-02/24620
- WO-A-02/094713
- DE-A1- 19 847 786
- US-A1- 2004 005 269
- "Mass synthesis equipment of carbon nanotubes using pyrolysis" DERWENT,, 1. Januar 1900 (1900-01-01), XP002232175

## Beschreibung

Die vorliegende Erfindung betrifft zunächst einen Reaktor zum Herstellen von Kohlenstoff-Nanomaterial, insbesondere zum Herstellen von Kohlenstoff-Nanofasern, gemäß dem Oberbegriff von Patentanspruch 1. Weiterhin betrifft die Erfindung ein Verfahren zum Herstellen von Kohlenstoff-Nanomaterial gemäß dem Oberbegriff von Patentanspruch 31.

In jüngerer Zeit hat das technische Gebiet der Kohlenstoff-Nanomaterialien immer mehr an Bedeutung gewonnen. Dabei werden immer neue Anwendungsgebiete für die Kohlenstoff-Nanomaterialien erschlossen. Daraus ergeben sich aber auch immer neue Herausforderungen bei der Herstellung solcher Kohlenstoff-Nanomaterialien. Insbesondere sollen Kohlenstoff-Nanomaterialien möglichst kostengünstig und mit möglichst wenig Zeitaufwand hergestellt werden können. Es besteht daher der Bedarf an kontinuierlichen Herstellungsverfahren.

Die Herstellung von Kohlenstoff-Nanomaterialien erfolgt beispielsweise derart, dass ein geeignetes Katalysatormaterial in einen Reaktor eingebracht wird. Dort dient es als Ausgangsmaterial, auf dem das Kohlenstoff-Nanomaterial, beispielsweise in Form von Kohlenstoff-Nanofasern, entsteht. Dies geschieht derart, dass sich Kohlenstoffmaterial auf dem Katalysatormaterial ablagert und somit das Kohlenstoff-Nanomaterial auf dem Katalysatormaterial wächst.

Aus dem Stand der Technik sind bereits verschiedene Lösungen bekannt, wie Kohlenstoff-Nanomaterialien hergestellt werden können.

Beispielsweise ist aus der WO 02/094713 ein Verfahren zur kontinuierlichen Massenproduktion von Kohlenstoff-Nanoröhrchen in einem Wirbelschichtreaktor bekannt. Dieses bekannte Verfahren funktioniert derart, dass ein Katalysatormaterial in einen Reaktorbehälter eingebracht wird, und das dieser Reaktorbehälter anschließend mit einem kohlenstoffhaltigen Gas beaufschlagt wird. Die Kohlenstoffatome lagern sich an dem Katalysatormaterial an, sodass die Kohlenstoff-Nanoröhrchen entstehen beziehungsweise wachsen können.

Die Herstellung von Kohlenstoff-Nanomaterial in einem Wirbelschichtreaktor weist jedoch eine Reihe von Nachteilen auf. So können die Kohlenstoff-Nanomaterialien, beispielsweise Kohlenstoff-Nanofasern, in einem Wirbelschichtreaktor nicht gerichtet und definiert wachsen, da das Katalysatormaterial und die daran entstehenden Kohlenstoff-Nanomaterialien während des Herstellungsprozesses im Wirbelschichtreaktor umhergewirbelt werden. Das hergestellte Kohlenstoff-Nanomaterial weist nicht selten eine "flusige" Gestalt auf.

Eine andere bekannte Lösung zur Herstellung von Kohlenstoff-Nanomaterial sieht vor, dass das Katalysatormaterial zunächst in flüssiger Form zugesetzt wird und das sich das Katalysatormaterial anschließend im Reaktorbehälter zersetzt. Neben dem flüssigen Katalysatormaterial wird in den Reaktorbehälter auch ein kohlenstoffhaltiges Reaktionsgas eingeleitet. Während nun das flüssige Katalysatormaterial durch den Reaktorbehälter fällt, kommt es zu einer Reaktion mit dem Reaktionsgas, wodurch sich das Kohlenstoff-Nanomaterial, beispielsweise in Form von Kohlenstoff-Nanofasern, bildet. Diese bekannte Lösung hat jedoch den Nachteil, dass das Katalysatormaterial zunächst in die flüssige Form gebracht werden muss, bevor dieses in den Reaktorbehälter eingespeist werden kann.

Bei einer weiteren bekannten Methode zum Herstellen von Kohlenstoff-Nanomaterial handelt es sich um das sogenannte CVD-Verfahren (Chemical-Vapor-Deposition). Dabei handelt es sich um ein Gasphasenabscheidungs-Verfahren Das CVD-Grundprinzip besteht darin, ausgewählte Reaktionsgase über das im Reaktorbehälter befindliche - vorzugsweise aufgeheizte - Katalysatormaterial zu leiten, auf dem sich die Kohlenstoff-Nanomaterialien bilden sollen. An den Katalysatormaterial-Oberflächen kommt es zu einer Reaktion mit dem Reaktionsgas, sodass als Reaktionsprodukte die gewünschten Kohlenstoff-Nanomaterialien entstehen, in dem sich die Kohlenstoffatome aus dem Reaktionsgas an dem Katalysatormaterial anlagern.

Ein bekanntes Verfahren zum Herstellen von Kohlenstoff-Nanoröhrchen mittels eines CVD-Verfahrens ist beispielsweise in der WO 02/26624 beschrieben.

Ausgehend vom genannten Stand der Technik liegt der vorliegenden Erfindung die Aufgabe zugrunde, einen Reaktor sowie ein Verfahren der eingangs genannten Art derart weiterzubilden, dass die im Zusammenhang mit dem Stand der Technik beschriebenen Nachteile vermieden werden. Insbesondere soll auf einfache Weise eine kontinuierliche Herstellung von Kohlenstoff-Nanomaterial ermöglicht werden.

Diese Aufgabe wird erfindungsgemäß gelöst durch den Reaktor mit den Merkmalen gemäß dem unabhängigen Patentanspruch 1 sowie das Verfahren mit den Merkmalen gemäß dem unabhängigen Patentanspruch 31. Weitere Vorteile, Merkmale, Details, Aspekte und Effekte der Erfindung ergeben sich aus den Unteransprüchen, der Beschreibung sowie den Zeichnungen. Dabei gelten solche Merkmale und Details, die im Zusammenhang mit dem erfindungsgemäßen Reaktor beschrieben sind, selbstverständlich auch im Zusammenhang mit dem erfindungsgemäßen Verfahren und umgekehrt.

Der vorliegenden Erfindung liegt die Erkenntnis zugrunde, dass eine einfache und dennoch kontinuierliche Herstellung von Kohlenstoff-Nanomaterialien erreicht werden kann, indem in einem Reaktorbehälter eine Fördereinrichtung vorgesehen wird.

Gemäß dem ersten Aspekt der Erfindung wird ein Reaktor zum Herstellen von Kohlenstoff-Nanomaterial, insbesondere zum Herstellen von Kohlenstoff-Nanofasern, bereitgestellt, mit wenigstens einem Reaktorbehälter zur Aufnahme eines Katalysatormaterials und zum Einwirken auf das Katalysatormaterial, wobei das Kohlenstoff-Nanomaterial auf der Basis des Katalysatormaterials herstellbar ist beziehungsweise hergestellt wird. Der Reaktor ist erfindungsgemäß dadurch gekennzeichnet, dass dieser einen Eintrittsbereich für das Katalysatormaterial und einen Austrittsbereich zur Entnahme des hergestellten Kohlenstoff-Nanomaterials aufweist, dass zur kontinuierlichen Herstellung von Kohlenstoff-Nanomaterial innerhalb des Reaktorbehälters eine Fördereinrichtung vorgesehen ist und dass die Fördereinrichtung zum Materialtransport vom Eintrittsbereich des Reaktorbehälters hin zu dessen Austrittsbereich ausgebildet ist.

Mit Hilfe des erfindungsgemäßen Reaktors ist es nunmehr möglich, auf einfache Weise Kohlenstoff-Nanomaterialien kontinuierlich herstellen zu können. Dabei ist erfindungsgemäß vorgesehen, dass das Katalysatormaterial, das zur Herstellung des Kohlenstoff-Nanomaterials benötigt wird, mittels der Fördereinrichtung im Reaktor transportiert werden kann.

Dabei ist gemäß der vorliegenden Erfindung vorgesehen, dass das Katalysatormaterial im Eintrittsbereich des Reaktors zunächst in diesen eingebracht und mittels der Fördereinrichtung durch den Reaktorbehälter hindurchtransportiert wird. Während des Transports entsteht das Kohlenstoff-Nanomaterial, das anschließend im Austrittsbereich des Reaktorbehälters aus diesem entnommen wird. Bei einer kontinuierlichen Zufuhr von Katalysatormaterial ist es somit möglich, Kohlenstoff-Nanomaterial kontinuierlich herzustellen. Wie dies im Einzelnen geschehen kann, wird im weiteren Verlauf der Beschreibung anhand nicht ausschließlicher Beispiele näher erläutert.

Gemäß der vorliegenden Erfindung weist der Reaktor wenigstens einen Reaktorbehälter auf. Dabei ist die Erfindung jedoch nicht auf eine bestimmte Anzahl von Reaktorbehältern beschränkt, sodass auch Reaktoren mit zwei oder mehr Reaktorbehältern denkbar sind.

Ebenso ist die Erfindung nicht auf die Herstellung bestimmter Kohlenstoff-Nanomaterialtypen beschränkt. Beispielsweise können die hergestellten Kohlenstoff-Nanomaterialien in Form von Nanofasern (nanofibres) und/oder Nanoröhrchen (nanotubes) und/oder Nanoschuppen (nanoshells) oder dergleichen ausgebildet sein.

Vorteilhaft können die hergestellten Kohlenstoff-Nanomaterialien eine gerichtete Struktur aufweisen.

In bevorzugter Ausgestaltung sind die Kohlenstoff-Nanomaterialien helixförmig ausgebildet. Diese helixförmige Struktur kann beispielsweise in der Form einer "Wendeltreppe" beschrieben werden. Die helixförmigen Nanostrukturen können vorteilhaft als helixförmige Kohlenstoff-Nanofasern ausgebildet sein, die somit zunächst eine äußere, in der Längsrichtung verlaufende Struktur in Form der Schraubenlinie und zusätzlich eine innere Struktur aufweisen. Diese innere Struktur, die in dem exemplarischen Beispiel der "Wendeltreppe" die einzelnen "Treppenstufen" bilden würde, umfasst einzelne Graphitebenen. Eine solche Struktur hat wegen ihrer vielen Kanten (edges) erhebliche Vorteile. Eine weitere vorteilhafte Art der Nanostrukturen ist röhrchenförmig aufgebaut, vorzugsweise mit einem Außendurchmesser von beispielsweise 35 nm und einem Innendurchmesser von beispielsweise 10 nm, sodass die Wandstärke in einer Größenordnung von etwa 10 nm liegt. Die innere Struktur weist, wenn es sich um Kohlenstoff-Nanofasern handelt, Graphitebenen auf, die fischgrätenartig angeordnet sind. Dabei können die Graphitebenen teilweise über den inneren Hohlraum hinweg mit der gegenüberliegenden Seite brückenartig verbunden sein.

Kohlenstoff-Nanomaterialien können bei entsprechender Ausgestaltung beispielsweise im Zusammenhang mit der Speicherung von Gas, insbesondere von Wasserstoff, eingesetzt werden. Natürlich sind auch andere Einsatzgebiete für Kohlenstoff-Nanomaterialien denkbar.

Ebenso ist die Erfindung nicht auf den Einsatz bestimmter Katalysatormaterialarten beschränkt. Beispielsweise kann es sich bei dem Katalysatormaterial um ein Metall, ein Metalloxid, Metallpartikel, Metalloxidpartikel, Kombinationen aus den vorgenannten Möglichkeiten oder dergleichen handeln. Beispielsweise kann das Katalysatormaterial auf der Basis Eisen, Nickel, Kupfer, Kobalt oder dergleichen gebildet sein.

Bei einem geeigneten Katalysatormaterial für die Herstellung von Kohlenstoff-Nanomaterial handelt es sich beispielsweise um Eisen (Fe). Ein solches Katalysatormaterial wird aus Sicherheitsgründen in oxidierter Form gelagert (Fe₂O₃), muss aber vor der Einspeisung in den Reaktorbehälter aufbereitet, beispielsweise reduziert, werden. In diesem aufbereiteten Zustand ist das Katalysatormaterial jedoch sehr explosiv.

Mit Hilfe einer geeigneten Vorrichtung zum Zuführen von Katalysatormaterial, die im weiteren Verlauf der Beschreibung näher erläutert wird, ist es auch möglich, derartige Katalysatormaterialien kontinuierlich einem Reaktor zuzuführen.

Weiterhin ist die Erfindung auch nicht auf bestimmte Gasarten beschränkt, die als Reaktionsgas zur Reaktion mit dem Katalysatormaterial eingesetzt werden können. Bei einem vorteilhaften Reaktionsgas kann es sich beispielsweise um Methan, Ethan, Ethen, Ethin, Kohlenmonoxid oder dergleichen handeln.

Vorteilhaft kann der Reaktor zur Herstellung von Kohlenstoff-Nanomaterial auf der Basis eines CVD-Verfahrens (Chemical Vapor Deposition) ausgebildet sein.

Vorzugsweise kann im Eintrittsbereich des Reaktorbehälters wenigstens ein Einlass für wenigstens ein Reaktionsgas vorgesehen sein. Über diesen Einlass wird das Reaktionsgas in den Reaktorbehälter eingespeist. Im einfachsten Fall besteht das Reaktionsgas aus einer Komponente, sodass der Einlass vorteilhaft mit einer entsprechenden Gasquelle verbunden ist. Es sind jedoch auch Fälle denkbar, in denen das Reaktionsgas aus mehreren Komponenten besteht, die zunächst zusammengemischt werden müssen. In diesem Fall kann der Einlass beispielsweise auch mit mehreren Gasquellen verbunden sein. Ebenso ist es denkbar, dass mehr als ein Einlass für das Reaktionsgas vorgesehen ist, sodass die einzelnen Gaskomponenten zunächst unabhängig voneinander in den Reaktorbehälter eingespeist und erst in diesem gemischt werden. Weiterhin ist vorteilhaft vorgesehen, dass im Austrittsbereich des Reaktorbehälters wenigstens ein Auslass für wenigstens ein Reaktions-Restgas vorgesehen ist. Über den Auslass kann das Reaktions-Restgas aus dem Reaktorbehälter abgeführt und einer Weiterverwertung beziehungsweise Entsorgung zugeführt werden.

Vorteilhaft ist vorgesehen, dass sich die Fördereinrichtung innerhalb des Reaktorbehälters vom Eintrittsbereich hin zu dessen Austrittsbereich erstreckt. Auf diese Weise wird für den Transport des Katalysatormaterials sowie des sich daraus bildenden Kohlenstoff-Nanomaterials möglichst viel Bauraumlänge des Reaktorbehälters ausgenutzt.

Vorzugsweise kann im Eintrittsbereich des Reaktorbehälters wenigstens eine Vorrichtung zum Zuführen von Katalysatormaterial vorgesehen sein. Über diese Vorrichtung wird das Katalysatormaterial in den Reaktorbehälter eingespeist. Dabei ist die Vorrichtung insbesondere in einer Weise ausgebildet, dass eine kontinuierliche Zufuhr von Katalysatormaterials möglich ist. Wie dies im Einzelnen geschehen kann, wird nachfolgend beschrieben.

Vorteilhaft kann die Vorrichtung zum Zuführen von Katalysatormaterial wenigstens zwei Behälter aufweisen, die zum Stoffaustausch über ein Verbindungselement miteinander verbunden sind, dergestalt, dass wenigstens einer der Behälter zum Aufnehmen des Katalysatormaterials ausgebildet ist, dass wenigstens einer der Behälter zum Zudosieren des Katalysatormaterials in den Reaktor ausgebildet ist und dass wenigstens ein Dosierbehälter ein Verbindungselement zur Verbindung mit dem Reaktor und zum Zuführen des Katalysatormaterials in den Reaktor aufweist.

Durch eine solche Vorrichtung wird es auf besonders einfache Weise möglich, einem Reaktorbehälter Katalysatormaterial zuzuführen.

Ein Grundmerkmal der genannten Vorrichtung besteht darin, dass zunächst ein Katalysatormaterial in die Vorrichtung zum Zuführen des Materials in einen Reaktorbehälter eingebracht wird. Bei dem in die Vorrichtung eingebrachten Katalysatormaterial kann es sich beispielsweise um ein bereits fertiggestelltes Katalysatormaterial handeln. Ebenso ist es denkbar, dass in die Vorrichtung zunächst ein Katalysator-Ausgangsmaterial eingebracht wird, das anschließend in der Vorrichtung aufbereitet beziehungsweise fertiggestellt wird. Alle diese unterschiedlichen Zustandsformen des Katalysatormaterials werden im weiteren Verlauf der Beschreibung der einfachheithalber als Katalysatormaterial bezeichnet.

Vorteilhaft weist die Vorrichtung zum Zuführen von Katalysatormaterial in den Reaktorbehälter wenigstens zwei Behälter auf. Einer dieser Behälter ist zum Aufnehmen des Katalysatormaterials ausgebildet. Dieser Behältertyp wird im weiteren Verlauf der Beschreibung auch als Aufnahmebehälter bezeichnet. Bei dem Aufnahmebehälter handelt es sich um eine Art Nachfüllgefäß, über das immer neues Katalysatormaterial in die Vorrichtung eingebracht werden kann.

Weiterhin kann wenigstens ein Behälter zum Zudosieren des Katalysatormaterials in den Reaktor vorgesehen sein. Dieser Behälter, der im weiteren Verlauf der Beschreibung auch als Dosierbehälter bezeichnet wird, hat die Aufgabe, das Katalysatormaterial zu seiner eigentlichen Verwendung in den Reaktor einzuspeisen. Bei dem Dosierbehälter handelt es sich folglich um eine Art Dosiergefäß, in dem das Katalysatormaterial vor seinem eigentlichen Einsatz zwischengelagert wird.

Der wenigstens eine Aufnahmebehälter sowie der wenigstens eine Dosierbehälter sind über ein geeignetes Verbindungselement, über das ein Stoffaustausch vom Aufnahmebehälter in den Dosierbehälter möglich ist, miteinander verbunden. Ebenso ist der Dosierbehälter über ein entsprechendes Verbindungselement, über das ein Stoffaustausch möglich ist, mit dem Reaktor verbindbar. Über die entsprechenden Verbindungselemente kann das Katalysatormaterial von dem Aufnahmebehälter zunächst in den Dosierbehälter und von diesem anschließend in den Reaktor gelangen.

Dabei ist die Erfindung nicht auf bestimmte Ausgestaltungsvarianten der Verbindungselemente beschränkt. Beispielsweise können diese Verbindungselemente in Form von Verbindungsleitungen oder dergleichen ausgebildet sein.

Die mehrstufige Ausgestaltung der Vorrichtung zum Zuführen des Katalysatormaterials hat den Vorteil, dass Katalysatormaterial kontinuierlich in den Reaktorbehälter eingebracht werden kann: So kann kontinuierlich Katalysatormaterial in den Aufnahmebehälter eingefüllt werden. In der für den Betrieb zulässigen Geschwindigkeit kann das Katalysatormaterial anschließend innerhalb der Vorrichtung in den Dosierbehälter eingebracht und aus diesem jeweils in der erforderlichen Menge in den Reaktorbehälter eingespeist werden.

Eine solche Vorrichtung hat insbesondere dann Vorteile, wenn das Katalysatormaterial innerhalb der Vorrichtung noch aufbereitet werden muss. Dies wird im weiteren Verlauf der Beschreibung näher erläutert.

Vorteilhaft kann vorgesehen sein, dass in der Vorrichtung zum Zuführen von Katalysatormaterial wenigstens ein weiterer Behälter vorgesehen ist, der zum Einwirken auf das Katalysatormaterial ausgebildet ist. In diesem Behälter kann dann das Katalysatormaterial in der gewünschten Weise aufbereitet werden. Dieser weitere Behälter, der im weiteren Verlauf der Beschreibung auch als Einwirkbehälter bezeichnet wird, ist vorteilhaft zwischen dem Aufnahmebehälter und dem Dosierbehälter angeordnet und zum Stoffaustausch über jeweils ein Verbindungselement mit dem Aufnahmebehälter und dem Dosierbehälter verbunden.

Wenn die Vorrichtung zum Zuführen eines geeigneten Katalysatormaterials zur Herstellung von Kohlenstoff-Nanomaterialien eingesetzt wird und es sich bei dem Katalysatormaterial um ein Metall handelt, das im Ausgangszustand als Metalloxid vorliegt, muss das Metalloxid vor der Einspeisung in den Reaktorbehälter zunächst reduziert werden. In einem solchen Fall ist der Einwirkbehälter vorteilhaft als Reduzierbehälter ausgebildet. Bei einem solchen Reduzierbehälter handelt es sich folglich um ein Reduktionsgefäß, in dem die Reduktion des Katalysatormaterials stattfindet.

In der einfachsten Ausgestaltung der Vorrichtung zum Zuführen von Katalysatormaterial ist es ausreichend, wenn diese zwei Behälter aufweist, nämlich einen Aufnahmebehälter und einen Dosierbehälter. Sofern das Katalysatormaterial innerhalb der Vorrichtung noch aufbereitet beziehungsweise bearbeitet werden soll, ist es vorteilhaft, wenn die Vorrichtung noch einen weiteren Behälter, nämlich einen Einwirkbehälter aufweist, der zwischen dem Aufnahmebehälter und dem Dosierbehälter angeordnet ist. Ebenso ist es denkbar, dass die Aufbereitung des Katalysatormaterials nicht in einem separaten Behälter, sondern im Aufnahme- und/oder Dosierbehälter stattfindet. In diesem Fall sind die Behälter in entsprechender Weise ausgebildet, wie weiter unten noch näher beschrieben wird.

Selbstverständlich ist die Erfindung nicht auf eine bestimmte Anzahl von Behältern beziehungsweise auf ein bestimmtes Anordnungsmuster von Behältern beschränkt. Die geeignete Anzahl und Abfolge der einzelnen Behältertypen ergibt sich vielmehr aus dem jeweiligen Einsatzgebiet für die Vorrichtung. Beispielsweise ist es denkbar, dass jeweils mehr als ein Exemplar eines jeden Behältertyps beziehungsweise von einzelnen Behältertypen vorgesehen ist. Je nach Geschwindigkeit des Prozesses kann es beispielsweise vorteilhaft sein, wenn mehr als ein Aufnahmebehälter vorgesehen ist. Ebenso kann es zur Wahrung eines kontinuierlichen Betriebs des Reaktors wünschenswert sein, wenn mehr als ein Dosierbehälter vorgesehen ist. Eine solche Lösung bietet sich insbesondere dann an, wenn die Aufbereitung des Katalysatormaterials zeitlich relativ lange dauert, sodass für den kontinuierlichen Betrieb eine ausreichend große Menge an Katalysatormaterial zwischengelagert werden muss. Ebenso kann es wünschenswert sein, mehr als einen Einwirkbehälter vorzusehen, insbesondere dann, wenn zur Aufbereitung des Katalysatormaterials mehrere Verfahrensschritte erforderlich sind.

Vorteilhaft kann wenigstens einer der Behälter als Druckbehälter ausgebildet sein. Der Einsatz solcher Druckbehälter ist insbesondere dann von Vorteil, wenn das Katalysatormaterial explosiv oder brennbar ist. Wenn beispielsweise Eisen als Katalysatormaterial für die Herstellung von Kohlenstoff-Nanomaterialien eingesetzt werden soll, bietet sich die Verwendung - wie weiter oben bereits erläutert - von Druckbehältern für die einzelnen Behälter der Vorrichtung an.

In weiterer Ausgestaltung kann in zumindest einzelnen Verbindungselementen wenigstens ein Verschlusselement vorgesehen sein. Dabei ist die Erfindung nicht auf bestimmte Ausgestaltungsformen der Verschlusselemente beschränkt. Bei dem Verschlusselement handelt es sich vorteilhaft um eine Art Schleuse, über die die einzelnen Verbindungselemente beziehungsweise die Verbindungen zwischen den einzelnen Behältern geöffnet oder geschlossen werden können. Das Verschlusselement hat dabei die Aufgabe, dass es im geöffneten Zustand einen Stoffaustausch zwischen den einzelnen Behältern zulässt. Wenn das Verschlusselement geschlossen ist, ist ein Stoffaustausch zwischen den einzelnen Behältern nicht möglich, sodass beispielsweise in einzelnen Behältern gezielt Reaktionen ablaufen können, ohne dass diese Reaktionen auch auf andere Behälter übergreifen. Bei dem Verschlusselement kann es sich vorteilhaft um ein entsprechend ausgebildetes Ventil oder dergleichen handeln.

Vorzugsweise kann eine Zufuhreinrichtung zum Zuführen von Katalysatormaterial aus dem Dosierbehälter in den Reaktor vorgesehen sein. Eine solche Zufuhreinrichtung kann beispielsweise als eine Art Dosierer fungieren, über den das Katalysatormaterial in der gewünschten Menge und/oder zum gewünschten Zeitpunkt in den Reaktorbehälter eingebracht werden kann. Dabei kann beispielsweise vorgesehen sein, dass das fertiggestellte Katalysatormaterial in dem Dosierbehälter zwischengelagert wird und dass über die Zufuhreinrichtung entsprechend portionierte Mengen an Katalysatormaterial in geeigneter Weise in den Reaktorbehälter eingebracht werden. Dabei ist die Erfindung nicht auf bestimmte Ausgestaltungsformen für die Zufuhreinrichtung beschränkt. Beispielsweise kann die Zufuhreinrichtung eine Art Transportschnecke oder dergleichen aufweisen, über die das Material aus dem Dosierbehälter in den Reaktorbehälter transportiert wird. Vorteilhaft sollte die Zufuhreinrichtung derart ausgestaltet sein, dass sie auch als Verschlusselement dienen kann. Auf diese Weise können auch innerhalb des Dosierbehälters noch bestimmte Reaktionen durchgeführt werden, ohne dass diese auf den Reaktorbehälter übergreifen können oder umgekehrt. Die Zufuhreinrichtung kann beispielsweise innerhalb des Verbindungselements zwischen Dosierbehälter und Reaktorbehälter angeordnet sein. Es ist jedoch auch denkbar, dass die Zufuhreinrichtung Bestandteil des Reaktorbehälters oder ein eigenständiges Bauteil ist, und dass der Dosierbehälter über ein Verbindungselement mit dieser Zufuhreinrichtung verbunden ist.

In weiterer Ausgestaltung kann vorgesehen sein, dass der Behälter zum Aufnehmen des Katalysatormaterials mit einer Einfülleinrichtung verbunden ist. Hierbei kann es sich beispielsweise um eine Art Einfülltrichter handeln, über den das Katalysatormaterial in besonders einfacher Weise in den Aufnahmebehälter eingebracht werden kann. Vorteilhaft ist wiederum vorgesehen, dass zwischen Einfülleinrichtung und Aufnahmebehälter wenigstens eine Verschlusseinrichtung vorgesehen ist, über die der Aufnahmebehälter gegenüber der Einfülleinrichtung abgeschlossen werden kann. Auf dieser Weise ist es beispielsweise auch möglich, dass innerhalb des Aufnahmebehälters bestimmte Reaktionen ablaufen, ohne dass diese auf die Einfülleinrichtung oder andere Behältertypen übergreifen können.

Nachfolgend werden einige nicht ausschließliche Beispiele dafür beschrieben, wie innerhalb eines Behälters auf das darin befindliche Katalysatormaterial eingewirkt werden kann.

Beispielsweise ist es denkbar, dass wenigstens ein Behälter wenigstens einen Medieneinlass und einen Medienauslass zum Zuleiten beziehungsweise Ableiten eines Mediums in den beziehungsweise aus dem Behälterinnenraum des Behälters aufweist. Auf diese Weise ist es möglich, dass das in einem Behälter befindliche Katalysatormaterial einem bestimmten Medium ausgesetzt wird, wodurch bestimmte Reaktionen hervorgerufen werden können. Wenn in den Verbindungselementen befindliche Verschlusselemente geschlossen sind, wirkt der Aufnahmebehälter als ein in sich geschlossenes Reaktorelement, sodass die Reaktionen nur innerhalb dieses Behälters ablaufen und nicht auf andere Behälter übergreifen können.

Beispielsweise ist es denkbar, dass es sich bei dem Medium um ein Inertgas handelt, das zum Spülen in den Behälterinnenraum, in dem sich das Katalysatormaterial befindet, eingebracht und nach Beendigung des Spülvorgangs aus diesem wieder entfernt wird. Wenn auf das im Behälter, beispielsweise im Einwirkbehälter, befindliche Katalysatormaterial eingewirkt werden soll, beispielsweise in dem dieses reduziert wird, kann über den Medieneinlass beispielsweise ein Reduziergas in Form eines Gemisches aus Wasserstoff und/oder Helium und/oder Stickstoff oder dergleichen eingeleitet werden. Ein vorteilhaftes Wasserstoff-Stickstoff-Gemisch ist das sogenannte "Formiergas".

Selbstverständlich ist es auch möglich, dass einzelne Behälter auch mit unterschiedlichen Medien geflutet werden können. Dazu kann beispielsweise vorgesehen sein, dass verschiedene Medieneinlässe und Medienauslässe für unterschiedliche Medien vorgesehen sind. Ebenso ist es denkbar, dass jeweils nur ein einziger Medieneinlass beziehungsweise Medienauslass vorgesehen ist, der dann mit unterschiedlichen Medienquellen verbindbar ist, sodass jeweils das für den entsprechenden Prozessschritt erforderliche Medium in den Behälter eingebracht werden kann.

Vorteilhaft kann wenigstens ein Behälter wenigstens eine Einrichtung zum Einstellen eines bestimmten Drucks innerhalb des Behälterinnenraums des Behälters aufweisen. Über eine solche Einrichtung ist es möglich, einen für einen bestimmten Reaktionsschritt erforderlichen Druck, beispielsweise einen bestimmten Unterdruck oder ein Vakuum, innerhalb des Behälterinnenraums einzustellen. Die Erfindung ist nicht auf die Einstellung bestimmter Drücke beschränkt. Beispielsweise kann es vorteilhaft sein, den Druck im Behälterinnenraum auf einen bestimmten Wert abzusenken. Ebenso kann es in bestimmten Fällen vorteilhaft sein, den Druck auf einen bestimmten Wert zu erhöhen. Die Einrichtung ist vorzugsweise derart ausgebildet, dass über diese ein variabler Druck - vorteilhaft stufenlos - im Behälterinnenraum eingestellt werden kann.

In weiterer Ausgestaltung ist es auch denkbar, dass wenigstens ein Behälter wenigstens eine Einrichtung zum Einstellen einer bestimmten Temperatur innerhalb des Behälterinnenraums des Behälters aufweist. Auf diese Weise kann der Behälterinnenraum und damit das darin befindliche Katalysatormaterial auf die für bestimmte Reaktionen erforderliche Temperatur gebracht werden. Die Erfindung ist nicht auf die Einstellung bestimmter Temperaturen beschränkt. Beispielsweise kann es vorteilhaft sein, die Temperatur im Behälterinnenraum auf einen bestimmten Wert abzusenken (Kühlwirkung). Ebenso kann es in bestimmten Fällen vorteilhaft sein, die Temperatur auf einen bestimmten Wert zu erhöhen (Heizwirkung). Die Einrichtung ist vorzugsweise derart ausgebildet, dass über diese eine variable Temperatur - vorteilhaft stufenlos - eingestellt werden kann.

Die Erfindung ist nicht auf bestimmte Ausgestaltungsformen für die vorgenannte Einrichtung beschränkt. So ist es beispielsweise denkbar, dass die Einrichtung als elektrisches Heizelement ausgebildet ist. Ebenso ist es denkbar, dass die Einrichtung in Form eines Wärmetauschers oder dergleichen ausgebildet ist.

In dem/den Behälter(n) können vorzugsweise geeignete Sensorelemente vorgesehen sein, die eine genaue Erfassung und Einstellung einzelner Prozess-Parameterwerte gestatten. Je nach Erfordernis kann es sich beispielsweise um Sensorelemente zur Erfassung des Drucks und/oder der Temperatur und/oder der Gaszusammensetzung oder dergleichen handeln.

Vorteilhaft sind die Sensorelemente mit wenigstens einer Steuereinrichtung verbunden, über die wiederum die vorstehend beschriebenen Einrichtungen gesteuert werden.

Nachfolgend wird beispielhaft eine vorteilhafte Ausgestaltungsform einer Vorrichtung zum Zuführen von Katalysatormaterial in einen Reaktorbehälter beschrieben. Diese Vorrichtung weist vorteilhaft drei Behälter auf, wobei jeder der drei Behälter durch eine evakuierbare (und mit Inertgas füllbare) Schleuse (Verschlusselement) vom nächsten Behälter getrennt ist. Bei dem ersten Behälter handelt es sich um einen Aufnahmebehälter (Nachfüllgefäß), der vorteilhaft auf einen bestimmten Druck einstellbar ist und anschließend mit Inertgas gefüllt werden kann. Bei einem nächsten Behälter handelt es sich vorteilhaft um einen Einwirkbehälter (Reduktionsgefäß), der mittels einer Schleuse (Verschlusselement) vorzugsweise auf einen bestimmten Druck einstellbar und mit Inertgas füllbar mit dem Aufnahmebehälter sowie einem weiterhin vorgesehenen Dosierbehälter verbunden ist. In dem Einwirkbehälter findet die Reduktion des Katalysatormaterials statt. Es ist beispielsweise möglich, Inertgas, Wasserstoff aber auch andere Gassorten - die weiter oben bereits erläutert wurden - in den Behälter einzufüllen. Bei dem dritten Behälter handelt es sich um den Dosierbehälter (Dosiergefäß), der vorteilhaft auf einen bestimmten Druck einstellbar und mit verschiedenen Gasen füllbar ist. Der Dosierbehälter ist mit dem Einwirkbehälter verbunden. Auf der anderen Seite ist der Dosierbehälter mit einer Zufuhreinrichtung (Dosierer) verbunden, über die das Katalysatormaterial in den Reaktorbehälter (beispielsweise ein Reaktionsrohr) eingebracht werden kann. In dem Dosierbehälter wird das reduzierte Katalysatormaterial vorteilhaft unter Inertgas zwischengelagert.

Mit der wie vorstehend beschriebenen Vorrichtung zum Zuführen von Katalysatormaterial ist es insbesondere möglich, oxidiertes Katalysatormaterial von außen zuzugeben, dieses in entsprechender Weise aufzubereiten (beispielsweise zu reduzieren) und anschließend dem eigentlichen Reaktionsprozess zuzugeben, ohne dass dafür der kontinuierliche Herstellungsprozess innerhalb des Reaktorbehälters unterbrochen werden müsste.

Mit Hilfe der wie vorstehend beschriebenen Vorrichtung zum Zuführen von Katalysatormaterial ist es besonders vorteilhaft möglich, Katalysatormaterial in Form von Eisen (Fe) zuzuführen, das zunächst in oxidierter Form (Fe₂O₃) gelagert wird. Auch derartige Katalysatormaterialien können nunmehr kontinuierlich in den Reaktorbehälter eingespeist werden. Zu diesem Zweck kann beispielsweise vorgesehen sein, dass das Metalloxid, das ja gefahrlos gehandhabt werden kann, zunächst in den Aufnahmebehälter der Vorrichtung eingefüllt wird. Innerhalb der Vorrichtung wird dann das Metalloxid in einer Weise aufbereitet, dass es schließlich im Dosierbehälter als reines Metall vorliegt. In dieser Form kann es anschließend in den Reaktorbehälter eingespeist werden.

Vorteilhaft kann im Austrittsbereich des Reaktorbehälters eine Vorrichtung zur Aufnahme des hergestellten Kohlenstoff-Nanomaterials vorgesehen sein. Dabei kann es sich beispielsweise um einen oder mehrere Sammelbehälter handeln, die zur Aufnahme des hergestellten Kohlenstoff-Nanomaterials ausgebildet sind. Wenn mit dem Reaktor die Kohlenstoff-Nanomaterialien kontinuierlich hergestellt werden sollen, muss in einem solchen Fall dafür Sorge getragen werden, dass die Aufnahmebehälter bei Erreichen eines bestimmten Füllgrades rechtzeitig ausgetauscht werden.

Die Aufnahmevorrichtung ist vorteilhaft über ein geeignetes Verschlußelement, das beispielsweise in Form eines schleusenartigen Gebildes ausgestaltet ist, mit dem Reaktorbehälter verbunden. Ähnliche Verschlußelemente sind bereits im Zusammenhang mit der Vorrichtung zum Zuführen von Katalysatormaterial beschrieben, so dass diesbezüglich auch auf die entsprechenden Ausführungen Bezug genommen und verwiesen wird.

Dabei kann es im einfachsten Fall ausreichen, ein einziges Verschlußelement vorzusehen. Ebenso ist es denkbar, zwei oder mehr Verschlußelemente vorzusehen, wobei dann wenigstens eines dem Reaktorbehälter, und wenigstens eines der Aufnahmevorrichtung zugeordnet ist. Natürlich kann auch vorgesehen sein, dass das wenigstens eine Verschlußelement als eigenständiges Bauelement zwischen Reaktorbehälter und Aufnahmevorrichtung angeordnet ist.

Ein derartiges Verschlußelement ist insbesondere dann von Vorteil, wenn es sich bei der Aufnahmevorrichtung um einen Aufnahmebehälter handelt. Wenn der Behälter voll ist und ausgewechselt werden soll, wird zunächst das Verschlußelement geschlossen. Dies geschieht in solch einer Weise, dass fertiggestelltes Kohlenstoff-Nanomaterial nicht aus dem Reaktorbehälter herausfallen kann und dass insbesondere keine unerwünschten Medien - beispielsweise Aussenluft - in der Innenraum des Reaktorbehälters gelangen können. Anschließend wird die Aufnahmevorrichtung ausgewechselt.

Bevor das Verschlußelement erneut geöffnet wird, können in der neuen, leeren Aufnahmevorrichtung beispielsweise zunächst gewünschte Bedingungen eingestellt werden. So ist es beispielsweise denkbar, dass die Aufnahmeeinrichtung über geeignete Einrichtungen zunächst auf einen bestimmten Druck und/oder eine bestimmte Temperatur gebracht wird. Alternativ oder zusätzlich ist es denkbar, dass der Innenraum der Aufnahmevorrichtung mittels geeigneter Medieneinlässe und Medienauslässe unter Verwendung von einem oder mehreren geeigneten Medium/Medien, beispielsweise einem Inertgas, geflutet wird, so dass in der Aufnahmevorrichtung eine entsprechende Atmosphäre eingestellt werden kann. Die Erfindung ist nicht auf bestimmte Ausgestaltungen der Einrichtung(en) beschränkt. Diese können beispielsweise ähnlich wie jene im Zusammenhang mit der weiter oben beschriebenen Vorrichtung zum Zuführen von Katalysatormaterial ausgebildet sein, so dass diesbezüglich auch auf die entsprechenden Ausführungen Bezug genommen und verwiesen wird.

Sobald dies geschehen ist, wird das Verschlußelement geöffnet und das fertiggestellte Kohlenstoff-Nanomaterial kann in die Aufnahmevorrichtung gelangen.

Ebenso ist es denkbar, dass es sich bei der Aufnahmevorrichtung um eine Fördereinrichtung handelt. In diesem Fall kann das hergestellte Kohlenstoff-Nanomaterial auf die Fördereinrichtung rieseln und wird über diese aus dem Bereich des Reaktors abtransportiert. Dabei ist die Erfindung nicht auf bestimmte Arten von Fördereinrichtungen beschränkt. Die Fördereinrichtungen können jedoch beispielsweise in ähnlicher Weise ausgestaltet sein, wie diejenigen Fördereinrichtungen, die zum Materialtransport innerhalb des Reaktorbehälters vorgesehen sind und die im weiteren Verlauf der Beschreibung näher erläutert werden.

Die vorliegende Erfindung ist nicht auf eine bestimmte Ausrichtung des oder der Reaktorbehälter(s) beschränkt. Beispielsweise kann vorgesehen sein, dass wenigstens einer der Reaktorbehälter horizontal ausgerichtet ist. Ebenso ist denkbar, dass wenigstens einer der Reaktorbehälter vertikal ausgerichtet ist.

Vorzugsweise kann die Fördereinrichtung in wenigstens einem der Reaktorbehälter zum Materialtransport mittels eines magnetischen Feldes ausgebildet sein. Eine solche Ausgestaltung der Fördereinrichtung ist insbesondere dann von Vorteil, wenn das Katalysatormaterial aus Materialien mit ferromagnetischen Eigenschaften besteht und somit mittels magnetischer Felder im Reaktorbehälter bewegt werden kann.

Vorteilhaft kann dazu vorgesehen sein, dass die Fördereinrichtung wenigstens eine Magneteinrichtung aufweist, mittels derer innerhalb oder außerhalb des Reaktorbehälters ein bewegliches magnetisches Feld erzeugbar ist beziehungsweise erzeugt wird. Dabei kann die Magneteinrichtung auf unterschiedlichste Art und Weise ausgebildet sein.

Nachfolgend werden einige bevorzugte Ausgestaltungsformen beschrieben, ohne dass die Erfindung jedoch auf die genannten Beispiele beschränkt wäre.

Beispielsweise ist es denkbar, dass die Magneteinrichtung aus einem oder mehreren Magnetelement(en) besteht, das/die entlang des Bodens oder einer Wandung des Reaktorbehälters beweglich angeordnet ist/sind. Bei den Magnetelementen kann es sich beispielsweise um Permanentmagnete, Elektromagnete oder dergleichen handeln. Dabei können die Magnetelemente entweder innerhalb oder außerhalb des Reaktorbehälters angeordnet sein. Aufgrund der durch die Magnetelemente erzeugten Magnetkräfte wird das Katalysatormaterial von den Magneten angezogen und haftet an diesen an, sodass das Material bei Bewegung der Magnetelemente ebenfalls durch den Reaktorbehälter gezogen wird.

Wenn die Magnetelemente außerhalb des Reaktorbehälters angeordnet sind, wird das Katalysatormaterial in Richtung der Wände des Reaktorbehälters angezogen. Beispielsweise kann in dem Reaktorbehälter deshalb eine besondere Aufnahmeeinrichtung - etwa eine Platte - vorgesehen sein. Das Katalysatormaterial wird durch die wirkenden Magnetkräfte an die Platte angepresst und kann bei Bewegung der Magnetelemente entlang der Platte durch den Reaktorbehälter hindurchgezogen werden. Die Platte kann vorteilhaft in einem bestimmten Abstand von der Wand des Reaktorbehälters entfernt vorgesehen sein. Auf diese Weise wird verhindert, dass das Katalysatormaterial in den Einfluß der Reaktorwand, in deren Bereich für den Prozeß unvorteilhafte Bedingungen herrschen können, gelangt.

In anderer Ausgestaltung ist es natürlich auch denkbar, auf solch eine Platte zu verzichten, so dass das Katalysatormaterial aufgrund der Magnetkräfte an die Wand des Reaktorbehälters angepresst und bei Bewegung der Magnetelemente entlang der Wandung des Reaktorbehälters durch diesen hindurchgezogen werden kann.

In weiterer Ausgestaltung kann vorgesehen sein, dass die Magnetelemente unbeweglich (fix) entlang des Reakorbehälters angeordnet sind. In diesem Fall sind die Magnetelemente vorzugsweise als Elektromagnete ausgebildet. Der Transport des Materials innerhalb des Reaktorbehälters erfolgt dann über ein variables, bewegliches Magnetfeld. Bei dieser elektromagnetischen Lösung werden die einzelnen Magnetelemente gezielt angesteuert, so dass sich in Summe ein bewegliches Magnetfeld einstellt, das den Transport des Materials übernimmt.

Auch ist es denkbar, dass die Magneteinrichtung bei Einsatz entsprechender Materialien - etwa ferromagnetischen Materialien - in solch einer Weise ausgestaltet ist, dass diese im Hinblick auf das Katalysatormaterial und das an beziehungsweise auf dem Katalysatormaterial entstehende Kohlenstoff-Nanomaterial eine anziehende Magnetkraft erzeugt, derart, dass das Material innerhalb des Reaktorbehälters in einen Schwebezustand gebracht wird. Beispielsweise kann die Magneteinrichtung in solch einem Fall im Bereich der Decke des Reaktorbehälters angeordnet sein. Das von der Magneteinrichtung erzeugte Magnetfeld ist so stark, dass das in den Reaktorbehälter einrieselnde Katalysatormaterial nicht auf den Reaktorbehälterboden fällt, sondern innerhalb des Reaktorbehälters schwebt. Durch die Bewegung das Magnetfelds kann das Material anschließend durch den Reaktorbehälter transportiert werden.

Ebenso ist es denkbar, dass die Magneteinrichtung bei Einsatz entsprechender Materialien in solch einer Weise ausgestaltet ist, dass diese im Hinblick auf das Katalysatormaterial und das an beziehungsweise auf dem Katalysatormaterial entstehende Kohlenstoff-Nanomaterial eine abstoßende Magnetkraft erzeugt, sodass das Material innerhalb des Reaktorbehälters in einen Schwebezustand gebracht wird. In diesem Fall ist die Magneteinrichtung vorteilhaft im Bereich des Reaktorbehälterbodens angeordnet.

Wenn nun das Magnetfeld in Transportrichtung des Materials bewegt wird, wird sich auch das Material innerhalb des Reaktorbehälters schwebend in Richtung der Magnetfeldbewegung bewegen. Das Material kann somit bei geeigneter Richtung des sich bewegenden Magnetfeldes durch den Reaktor hindurchgezogen werden. Dabei ist beispielsweise ein Prinzip denkbar, wie es bei einer Magnetschwebebahn realisiert ist.

In weiterer Ausgestaltung kann vorgesehen sein, dass in der Magneteinrichtung eine definierte, auf ein vorgegebenes Gewicht des hergestellten Kohlenstoff-Nanomaterials bezogene Magnetkraft einstellbar ist beziehungsweise eingestellt wird. In einem solchen Fall ist es möglich, bei einem Transport des Materials durch den Reaktorbehälter die zunehmende Masse in Folge des Wachstumsprozesses auszunutzen. Wenn das Kohlenstoff-Nanomaterial auf dem Katalysatormaterial wächst, wird das Material irgendwann so schwer, dass die durch die Magneteinrichtung erzeugten Magnetkräfte nicht mehr ausreichen, um das Material innerhalb des Reaktorbehälters in der Schwebe zu halten. Wenn das Material folglich diese kritische Masse erreicht hat, wird es in dem Reaktorbehälter trotz Vorhandensein des magnetischen Feldes auf den Boden fallen. Diese Tatsache kann man sich nunmehr zu nutze machen.

Beispielsweise kann vorgesehen sein, dass eine Vorrichtung zur Aufnahme des hergestellten Kohlenstoff-Nanomaterials dort angeordnet ist, wo das hergestellte Kohlenstoff-Nanomaterial im Reaktorbehälter zu Boden geht.

Wenn das hergestellte Kohlenstoff-Nanomaterial dort aus dem Reaktorbehälter entnommen wird, wo es zu Boden gegangen ist, hat dies weiterhin den Vorteil, dass das Material immer mit einem identischen Gewicht aus dem Reaktorbehälter entnommen wird. Während des Prozesses ist es möglich, dass das Kohlenstoff-Nanomaterial während seines Herstellungsprozesses unterschiedlich schnell wächst. Das bedeutet, dass im Austrittsbereich des Reaktorbehälters Kohlenstoffmaterial mit unterschiedlichem Gewicht und damit mit unterschiedlicher Größe vorhanden sein kann. Wenn nun die vorstehend beschriebene Herstellungsvariante eingesetzt wird, bedeutet dies, dass durch die Einstellung der bestimmten Magnetkraft immer sichergestellt wird, dass das Kohlenstoff-Nanomaterial ab einem definierten Gewicht im Reaktorbehälter zu Boden fällt. Wenn diese zu Boden gehenden Kohlenstoff-Nanomaterialien sodann gleich aus dem Reaktorbehälter entfernt werden, weisen diese immer zumindest im Wesentlichen ein identisches Gewicht auf.

In einem solchen Fall kann vorteilhaft vorgesehen sein, dass mehrere Aufnahmevorrichtungen für das hergestellte Kohlenstoff-Nanomaterial entlang der Transportrichtung des Materials innerhalb des Reaktorbehälters vorgesehen sind. Diesbezüglich können - wie weiter oben beschrieben - geeignete Verschlußelemente vorgesehen sein. Ebenso ist es denkbar, im Reaktorbehälter eine geeignete weitere Fördereinrichtung, beispielsweise ein Förderband oder dergleichen vorzusehen, auf das das herabfallende Kohlenstoff-Nanomaterial niedergeht. Die Fördereinrichtung kann dann zu einer zentralen Aufnahmevorrichtung, beispielsweise einem zentralen Sammelbehälter führen. Auf diese Weise ist es unerheblich, dass das herabfallen innerhalb des Reaktorbehälters aufgrund unterschiedlich aktiver Partikel früher oder später erfolgt.

Da das zu transportierende Material innerhalb des Reaktorbehälters in dessen Eintrittsbereich in der Regel leichter ist als in dessen Austrittsbereich, kann weiterhin vorgesehen sein, dass in der Magneteinrichtung eine in Richtung des sich bewegenden Magnetfelds veränderliche oder veränderte Magnetkraft einstellbar ist beziehungsweise eingestellt wird. Auf diese Weise kann erreicht werden, dass das Material immer mit einem definierten Abstand zur Reaktorbehälterwand gehalten werden kann. Beispielsweise kann dies dadurch erreicht werden, dass das Magnetfeld im Eintrittsbereich schwächer ausgebildet ist, als im Austrittsbereich.

Die vorstehend beschriebene, zum Materialtransport mittels eines magnetischen Feldes ausgebildete Fördereinrichtung kann beispielsweise im Bereich des Bodens und/oder wenigstens einer der Seitenwände und/oder der Decke des Reaktorelements - innerhalb oder ausserhalb von diesem - vorgesehen sein.

In weiterer Ausgestaltung kann vorgesehen sein, dass die Fördereinrichtung in wenigstens einem der Reaktorbehälter als umlaufende Förderschleife ausgebildet ist.

Da die Erfindung nicht auf eine bestimmte Anzahl von Reaktorbehältern beschränkt ist, sind selbstverständlich auch solche Lösungsvarianten denkbar, in denen mehrere Reaktorbehälter vorgesehen sind und bei denen die Reaktorbehälter jeweils über unterschiedliche Fördereinrichtungen verfügen.

Wenn die Fördereinrichtung als umlaufende Förderschleife ausgebildet ist, rieselt das Katalysatormaterial im Eintrittsbereich des Reaktorbehälters auf die Förderschleife und wird mit deren Hilfe durch den Reaktorbehälter transportiert. Dabei kann durchaus auch vorgesehen sein, dass die Förderschleife in Form einer Magneteinrichtung ausgebildet ist. Diesbezüglich wird auf die vorstehenden Ausführungen zu der zum Transport mittels eines magnetischen Feldes ausgebildeten Fördereinrichtung voll inhaltlich Bezug genommen und hiermit verwiesen. Wenn eine derartige magnetische Förderschleife eingesetzt wird, wird das magnetische Feld, welches die Magnetkraft erzeugt, mittels derer das Material auf der Förderschleife gehalten wird, vorteilhaft im Austrittsbereich des Reaktorbehälters zumindest zeitweilig unterbrochen, sodass das hergestellte Kohlenstoff-Nanomaterial von der Förderschleife herabfallen und in eine Aufnahmevorrichtung gelangen kann.

Vorteilhaft kann die Förderschleife jedoch als Förderband ausgebildet sein. In einer solchen Ausgestaltung kann das Katalysatormaterial auf diesem Förderband direkt durch den Reaktorbehälter transportiert werden, ohne auf seine magnetischen Eigenschaften Rücksicht nehmen zu müssen. Eine solche Ausgestaltung eignet sich daher besonders gut für nicht ferromagnetische Katalysatormaterialien.

Beispielsweise kann vorgesehen sein, dass an dem Förderband eine Anzahl von Aufnahmebehältnissen angeordnet ist. Eine solche Ausgestaltung der Fördereinrichtung ist besonders dann von Vorteil, wenn es sich bei dem Reaktorbehälter um einen senkrecht stehenden (vertikalen) Reaktorbehälter, beispielsweise ein Reaktorrohr oder dergleichen handelt. In einem solchen Fall können die Aufnahmebehältnisse beispielsweise in Form von kleinen Schaufeln ausgebildet sein, die jeweils kleine Mengen an Katalysatormaterial aufnehmen können. Diese Schaufeln können dann an der gewünschten Stelle im Austrittsbereich des Reaktorbehälters geleert werden. Dabei entspricht das Prinzip dieser Fördereinrichtung in etwa demjenigen Prinzip eines Wasserrads oder eines Schaufelrads.

In weiterer Ausgestaltung ist denkbar, dass das Förderband aus einem Material mit guten Hafteigenschaften für das Katalysatormaterial und das entstehende Kohlenstoff-Nanomaterial besteht. Dabei kann das Förderband beispielsweise aus einem porösen Material bestehen, an dem die Katalysatorpartikel und die Partikel des entstehenden Kohlenstoff-Nanomaterials aufgrund der Rauhigkeit des Materials fixiert werden beziehungsweise anhaften. Die Materialpartikel verhaken sich im rauen Förderband, das beispielsweise als Gewebeband oder dergleichen ausgebildet sein kann, und werden auf diese Weise durch den Reaktorbehälter transportiert.

Um das entstandene Kohlenstoff-Nanomaterial möglichst vollständig aus dem Reaktorbehälter entfernen zu können, können im Austrittsbereich des Reaktorbehälters vorteilhaft Mittel zum Austragen des hergestellten Kohlenstoff-Nanomaterials aus dem Reaktorbehälter vorgesehen sein. Der Einsatz derartiger Mittel bewirkt, dass auch solches Kohlenstoff-Nanomaterial, das im Austrittsbereich nicht von selbst von der Fördereinrichtung herabfällt, trotzdem aus dem Reaktorbehälter entfernt werden kann. Dabei ist die Erfindung nicht auf bestimmte Ausgestaltungsformen für derartige Mittel beschränkt. Beispielsweise, jedoch nicht ausschließlich, können die Mittel zum Austragen als Abstreifelement(e), als Abstreifgitter oder dergleichen ausgebildet sein.

Vorzugsweise ist der Antrieb der Fördereinrichtung außerhalb des Reaktorbehälters angeordnet. Dies ist insbesondere dann sinnvoll, wenn die Fördereinrichtung innerhalb des Reaktorbehälters arbeiten muss. Im Reaktorbehälter sind aber in der Regel hochexplosive Materialien anwesend, sodass ein Antrieb innerhalb des Reaktorbehälters zu Explosionen führen könnte. Die Kopplung des Antriebs mit der Fördereinrichtung kann beispielsweise über eine magnetische Kupplung erfolgen, die die Kopplung zwischen dem äußeren Antrieb und der inneren Fördereinrichtung magnetisch bewerkstelligt. Ebenso ist es denkbar, als Antrieb für die Fördereinrichtung einen Schneckenantrieb oder dergleichen vorzusehen.

Während der Herstellung des Kohlenstoff-Nanomaterials tritt nicht selten die Situation auf, dass das Reaktionsgas mit dem Katalysatormaterial innerhalb des Reaktionsbehälters nur teilweise abreagiert. Außerdem können andere Gase, beispielsweise Wasserstoff oder dergleichen, während des Herstellungsprozesses produziert werden. Diese Restgase wurden bisher nicht weiter verwertet. Vorteilhaft kann daher im Austrittsbereich des Reaktorbehälters wenigstens eine Vorrichtung zur Messung der Gaszusammensetzung des Reaktionsrestgases vorgesehen sein. Damit kann die Gaszusammensetzung des den Reaktionsbehälter verlassenden Reaktionsrestgases bestimmt werden. Dies kann beispielsweise mit einem Massenspektrometer oder dergleichen geschehen. Aufgrund der gemessenen Gaszusammensetzungswerte kann anschließend entschieden werden, ob das Reaktionsrestgas entsorgt oder weiter verwertet werden kann.

Beispielsweise kann vorgesehen sein, dass sich im Austrittsbereich des Reaktorbehälters wenigstens eine Medienableitung zum Ableiten von Reaktionsrestgas befindet. Dabei kann insbesondere vorgesehen sein, dass der Auslass des Reaktorbehälters mit wenigstens einer solchen Medienableitung verbunden ist.

Vorzugsweise kann in der Medienableitung eine Vorrichtung zum Erzeugen/Aufbereiten von Reaktionsgas vorgesehen sein. In anderer Ausgestaltung ist es denkbar, dass die Medienableitung des Reaktorbehälters zumindest zeitweilig mit einer Vorrichtung zum Erzeugen/Aufbereiten von Reaktionsgas verbunden ist. Auf diese Weise ist es beispielsweise möglich, dem Reaktionsrestgas - insbesondere nach einer Analyse der Gaszusammensetzung - soviel frisches Reaktionsgas zuzugeben, sodass anschließend wieder die Ausgangszusammensetzung für die Reaktion erreicht wird. Danach kann das auf diese Weise aufbereitete Reaktionsgas über den Einlass des Reaktorbehälters wieder in diesen eingespeist werden.

In weiterer Ausgestaltung ist auch denkbar, dass in der Medienableitung eine Trenneinrichtung zum Abtrennen von bestimmten Komponenten aus dem Reaktionsrestgas vorgesehen ist. In anderer Ausgestaltung kann vorgesehen sein, dass die Medienableitung zumindest zeitweilig mit einer solchen Trenneinrichtung verbunden ist. Ist beispielsweise eine bestimmte Gaskomponente - etwa Wasserstoff - im Reaktionsrestgas in zu großer Menge vorhanden, sodass die anfängliche Gaszusammensetzung - wie vorstehend beschrieben - nicht mehr oder nur sehr schwer durch Zumischung von frischem Reaktionsgas erreicht werden kann, kann die störende Gaskomponente mit Hilfe einer solchen Trenneinrichtung wirksam abgetrennt werden. Bei der Trenneinrichtung kann es sich im Zusammenhang mit Wasserstoff beispielsweise um eine Platinmembran oder dergleichen handeln. Die abgetrennte Gaskomponente, beispielsweise der abgetrennte Wasserstoff, kann im Prozess weiter verwertet werden. So ist es beispielsweise denkbar, dass die abgetrennte Gaskomponente zum Heizen des Reaktorbehälters benutzt wird.

Üblicherweise findet der Herstellprozess des Kohlenstoff-Nanomaterials bei einer bestimmten Temperatur statt. So ist es bei Einsatz eines CVD-Verfahrens beispielsweise erforderlich, dass das Katalysatormaterial auf eine bestimmte Temperatur gebracht (entweder erhitzt oder gekühlt) wird, damit es mit dem Reaktionsgas reagieren kann. Zu diesem Zweck kann für wenigstens einen Reaktorbehälter beispielsweise wenigstens eine Einrichtung zum Einstellen einer bestimmten Temperatur vorgesehen sein. Über diese Einrichtung kann der Innenraum des Reaktorbehälters und/oder das Reaktionsgas - je nach Anwendungsfall - entweder auf die erforderliche Temperatur erhitzt oder gekühlt werden. Dabei ist die Erfindung nicht auf bestimmte Ausgestaltungsformen für die Einrichtung beschränkt. Beispielsweise kann die Einrichtung als elektrische Heizeinrichtung ausgebildet sein. Ebenso ist es denkbar, dass die Einrichtung als Wärmetauscher oder dergleichen ausgebildet ist. In diesem Fall könnte die Einrichtung in besonderes einfacher Weise mit der wie weiter vorstehend beschriebenen abgetrennten Gaskomponente bespeist werden.

Vorzugsweise ist eine Steuereinrichtung vorgesehen, die mit wenigstens einem Sensorelement im Innenraum des Reaktorbehälters verbunden ist. Weiterhin kann die Steuereinrichtung aufgrund von gemessenen Werten die Einrichtung zum Einstellen einer bestimmten Temperatur entsprechend betätigen. Beispielsweise kann über das wenigstens eine Sensorelement der Druck und/oder die Temperatur und/oder die Gaszusammensetzung innerhalb des Reaktorbehälters ermittelt werden. Aufgrund dieser Messwerte wird dann die erforderliche Temperatur eingestellt.

Vorzugsweise können die in dem erfindungsgemäßen Reaktor hergestellten Kohlenstoff-Nanomaterialien anschließend aktiviert werden. Eine solche Aktivierung hat die Funktion, die Kohlenstoff-Nanomaterialien aufzubrechen, damit beispielsweise Gas in den einzelnen Graphitebenen der inneren Struktur eingelagert werden kann. Die Einlagerung des Gases kann physikalisch oder chemisch in analoger Form wie bei Metallhydriden erfolgen. Die Aktivierung der Kohlenstoff-Nanomaterialien erfolgt vorteilhaft durch ein geeignetes Reaktionsgas.

Insbesondere dann, wenn die Kohlenstoff-Nanostrukturen eine gerichtete Struktur aufweisen, wird insbesondere bei faserartigen Kohlenstoff-Nanostrukturen erreicht, dass ein dichteres makroskopisches Gebilde erzielt wird. Insbesondere können durch eine geeignete Ordnung Zwischenräume zwischen den einzelnen Kohlenstoff-Nanostrukturen minimiert werden, wodurch sich insgesamt eine Erhöhung der Kohlenstoff-Nanostukturen ergibt. Durch eine Ordnung der Kohlenstoff-Nanostrukturen ist es weiterhin möglich, eine durch die Beladung mit Druckgas auftretende Expansion der Kohlenstoff-Nanostrukturen gezielt zu beherrschen. Während sich ungeordnete Fasern beispielsweise in drei Dimensionen ausdehnen, dehnen sich geordnete Fasern im Wesentlichen nur in einer Dimension aus. Der Ausdehnung in nur einer Dimension kann jedoch auf einfache Weise Rechnung getragen werden, beispielsweise durch ein entsprechendes Befüllen eines Speicherbehälters mit den Kohlenstoff-Nanostrukturen.

Gemäß einem weiteren Aspekt der Erfindung wird ein Verfahren zum Herstellen von Kohlenstoff-Nanomaterial in einem Reaktor mit wenigstens einem Reaktorbehälter bereitgestellt, das erfindungsgemäß dadurch gekennzeichnet ist, dass ein Katalysatormaterial in einem Eintrittsbereich wenigstens eines Reaktorbehälters in diesen eingebracht wird, dass das Katalysatormaterial mittels einer Fördereinrichtung durch den Reaktorbehälter transportiert wird, wobei ein in dem Reaktorbehälter befindliches Reaktionsgas auf das Katalysatormaterial einwirkt, wodurch das Kohlenstoff-Nanomaterial entsteht und dass das hergestellte Kohlenstoff-Nanomaterial im Austrittsbereich des Reaktorbehälters aus diesem entnommen wird.

Besonders vorteilhaft kann ein solches Verfahren zur kontinuierlichen Herstellung von Kohlenstoff-Nanomaterial ausgebildet sein.

Dazu kann beispielsweise vorgesehen sein, dass das Verfahren als CVD-Verfahren ausgebildet ist.

Das wie vorstehend beschriebene erfindungsgemäße Verfahren kann besonders vorteilhaft in einem wie weiter vorstehend beschriebenen erfindungsgemäßen Reaktor durchgeführt werden.

Nachfolgend wird die Erfindung anhand von Ausführungsbeispielen unter Bezugnahme auf die beiliegenden Zeichnungen näher erläutert. Es zeigen:
- Figur 1: in schematischer Ansicht eine erste Ausführungsform eines Reaktors gemäß der vorliegenden Erfindung;
- Figur 2: in schematischer Ansicht eine weitere Ausführungsform eines Reaktors gemäß der vorliegenden Erfindung;
- Figur 3: in schematischer Darstellung noch ein weiteres Ausführungsbeispiel eines Reaktors gemäß der vorliegenden Erfindung; und
- Figur 4: eine schematische Darstellung einer Vorrichtung zum Zuführen von Katalysatormaterial in einen Reaktor gemäß der vorliegenden Erfindung.

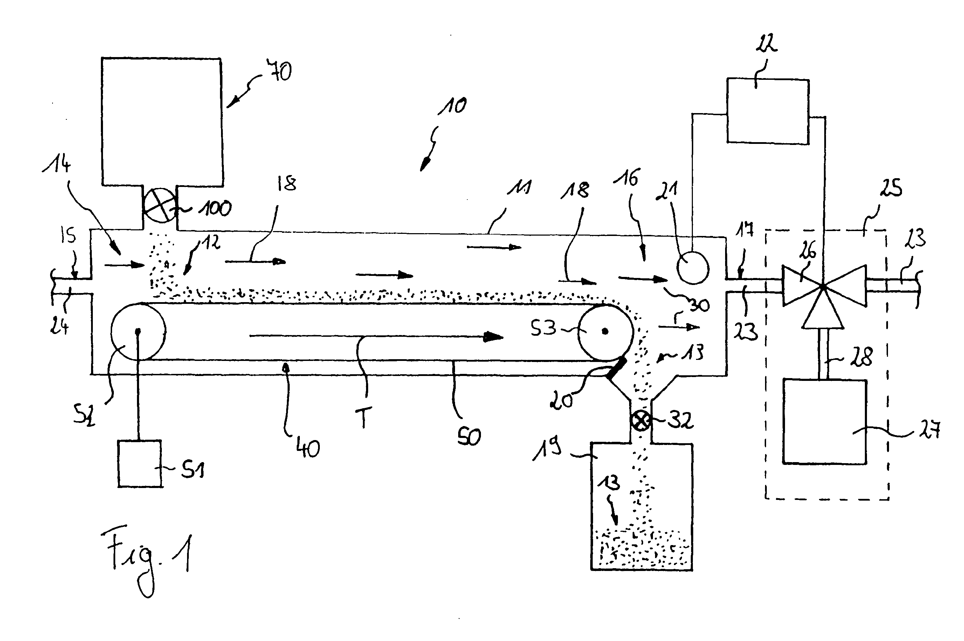

In Figur 1 ist ein Reaktor 10 zum Herstellen von Kohlenstoff-Nanomaterial 13 dargestellt, wobei das Kohlenstoff-Nanomaterial 13 die Form von Kohlenstoff-Nanofasern haben soll.

Der Reaktor 10 weist zunächst wenigstens einen Reaktorbehälter 11 auf, wobei im vorliegenden Beispiel der Einfachheit halber nur ein einzelner Reaktorbehälter 11 dargestellt ist. Der Reaktorbehälter 11 verfügt zunächst über einen Eintrittsbereich 14, der unter anderem über einen Einlass 15 für ein Reaktionsgas 18 verfügt. Der Einlass 15 ist mit einer Medienzuleitung 24 verbunden, die wiederum mit einer nicht näher dargestellten Gasquelle verbunden ist.

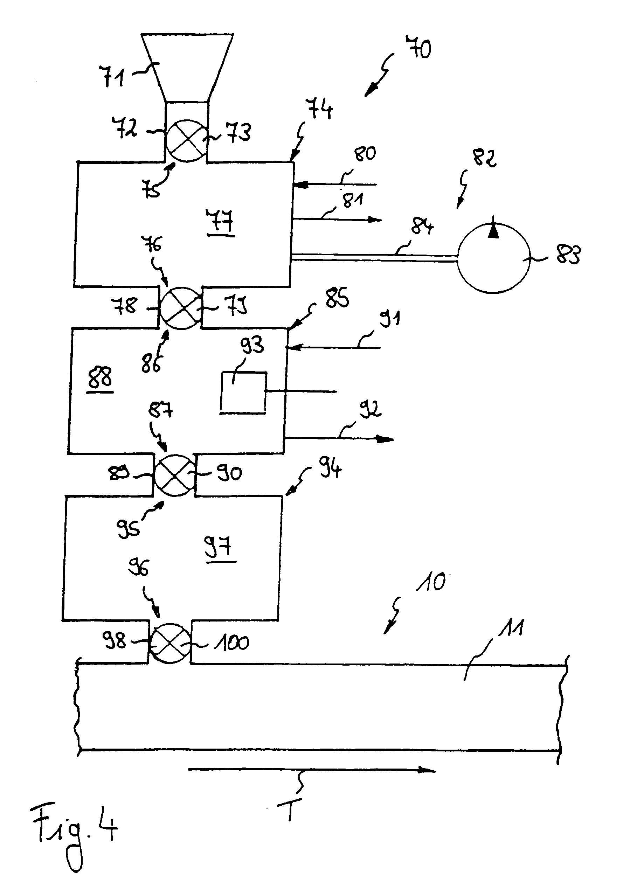

Weiterhin ist im Eintrittsbereich 14 des Reaktorbehälters 11 eine Vorrichtung 70 zum Zuführen von Katalysatormaterial 12 in den Reaktorbehälter 11 vorgesehen. Die Vorrichtung 70, die im Zusammenhang mit der Figur 4 weiter unten im Detail beschrieben wird, hat die Aufgabe, das für die Herstellung des Kohlenstoff-Nanomaterial 13 erforderliche Katalysatormaterial 12 in den Reaktorbehälter 11 einzuspeisen. Dies erfolgt über eine Zufuhreinrichtung 100, die im Zusammenhang mit Figur 4 weiter unten ebenfalls im Detail beschrieben wird.

Der Prozessablauf innerhalb des Reaktors 10, bei dem es sich beispielsweise um einen CVD-Prozess handelt, erfolgt grundsätzlich derart, dass das Reaktionsgas 18 innerhalb des Reaktorbehälters 11 mit dem Katalysatormaterial 12 reagiert. Bei dem Katalysatormaterial handelt es sich beispielsweise um reines Eisen (Fe). Das Reaktionsgas 18 ist vorteilhaft ein kohlenstoffhaltiges Gas, etwa Methan oder dergleichen. Während der Reaktion des Reaktionsgases 18 mit dem Katalysatormaterial 12 setzen sich Kohlenstoffatome aus dem Reaktionsgas 18 an dem Katalysatormaterial 12 an, sodass nach und nach das Kohlenstoff-Nanomaterial 13, im vorliegenden Fall in Form von Kohlenstoff-Nanofasern entsteht. Um eine kontinuierliche Herstellung von Kohlenstoff-Nanomaterial 13 zu gewährleisten, ist erfindungsgemäß vorgesehen, dass innerhalb des Reaktorbehälters 11 eine Fördereinrichtung 40 vorgesehen ist. Im Beispiel gemäß Figur 1 weist die Fördereinrichtung 40 eine umlaufende Förderschleife in Form eines Förderbandes 50 auf, das um zwei Achselemente 52, 53 umläuft. Die Fördereinrichtung 40 wird über einen geeigneten Antrieb 51 angetrieben, wobei der Antrieb 51 aus Sicherheitsgründen außerhalb des Reaktorbehälters 11, in dem sich während des Prozesses hochexplosive Stoffe befinden, angeordnet ist.

Während des Herstellungsprozesses rieselt das Katalysatormaterial 12 aus der Vorrichtung 70 auf das Förderband 50 und wird auf diesem in Transportrichtung T in Richtung eines Austrittsbereichs 16 des Reaktorbehälters 11 transportiert. Während des Transports reagiert das Katalysatormaterial 12 mit dem Reaktionsgas 18, wodurch das Kohlenstoff-Nanomaterial 13 entsteht. Wenn das Material im Austrittsbereich 16 angelangt ist, ist das Kohlenstoff-Nanomaterial 13 fertiggestellt und kann aus dem Reaktorelement 11 entnommen werden. Im Beispiel nach Figur 1 ist dazu eine Aufnahmevorrichtung 19 in Form eines Sammelbehälters vorgesehen. Das hergestellte Kohlenstoff-Nanomaterial 13 rieselt vom Förderband 50 in den Sammelbehälter 19 ein.

Wenn der Sammelbehälter einen bestimmten Füllstand erreicht hat, muss dieser ausgewechselt werden. Damit dies in einfacher Weise realisiert werden kann, ist ein in Form einer Schleuseneinrichtung ausgebildetes Verschlußelement 32 vorgesehen. Bevor der Sammelbehälter 19 ausgetauscht wird, wird das Verschlußelement 32 geschlossen. Kohlenstoff-Nanomaterial kann nicht mehr aus dem Reaktorbehälter 11 hinaus gelangen, unerwünschte Medien, wie beispielsweise Aussenluft, können nicht mehr in den Reaktorbehälter 11 hinein gelangen. Nun wird der Sammelbehälter 19 ausgetauscht. Bevor das Verschlußelement 32 erneut geöffnet wird, kann in dem neuen Sammelbehälter 19 eine gewünschte Atmosphäre eingestellt werden. Sobald das Verschlußelement 32 wieder geöffnet wurde, steht der Sammelbehälter 19 zur Aufnahme von Kohlenstoff-Nanomaterial 13 bereit.

Um zu gewährleisten, dass keine Reste des hergestellten Kohlenstoff-Nanomaterials 13 auf dem Förderband 50 verbleiben, sind Mittel 20 zum Austragen des hergestellten Kohlenstoff-Nanomaterials 13 vorgesehen, bei denen es sich beispielsweise um ein Abstreifelement, ein Abstreifgitter oder dergleichen handeln kann.

Wenn der Sammelbehälter 19 zur Aufnahme des hergestellten Kohlenstoff-Nanomaterials erneut voll ist, wird dieser durch einen leeren Aufnahmebehälter 19 ausgetauscht.

Mit Hilfe des Reaktors 10 ist eine kontinuierliche Herstellung von Kohlenstoff-Nanomaterial möglich, da dem Reaktorbehälter 11 insbesondere kontinuierlich Katalysatormaterial 12 sowie Reaktionsgas 18 zugeführt werden kann. Weiterhin ist sichergestellt, dass das erzeugte Kohlenstoff-Nanomaterial 13 kontinuierlich aus dem Reaktorbehälter 11 entnommen werden kann.

Während des Herstellprozesses reagiert das Reaktionsgas 18 im Reaktionsbehälter 11 nur teilweise ab, sodass das Reaktionsrestgas 30, das den Reaktorbehälter 11 über einen Auslass 17 verlässt, noch unverbrauchtes Reaktionsgas enthält. Dieses restliche Reaktionsgas kann nunmehr auch weiter verwertet werden.

Dazu ist gemäß Figur 1 zunächst eine Vorrichtung 21 zum Messen der Gaszusammensetzung des Reaktionsrestgases 30 vorgesehen. Diese Vorrichtung 21, bei der es sich um ein geeignetes Sensorelement handelt, ist mit einer Steuereinrichtung 22 verbunden, in der die von der Vorrichtung 21 gemessenen Werte analysiert werden. Die Steuereinrichtung 22 ist weiterhin mit einer Vorrichtung 25 zum Erzeugen/Aufbereiten von Reaktionsgas verbunden und hier insbesondere mit einem Ventil 26.

Die Vorrichtung 25 zum Erzeugen/Aufbereiten von Reaktionsgas ist in einer Medienableitung 23 angeordnet, die wiederum mit dem Auslass 17 des Reaktorbehälters 11 verbunden ist. Auf diese Weise kann das im Reaktorbehälter 11 in dessen Austrittsbereich 16 befindliche Reaktionsrestgas 30 in die Medienableitung 23 eintreten und damit zu der Vorrichtung 25 zum Erzeugen/Aufbereiten von Restgas gelangen.

Die Vorrichtung 25 weist neben dem Ventil 26 eine Medienquelle 27 auf, bei der es sich im vorliegenden Fall um eine Gasquelle mit Reaktionsgas 18 handelt. Die Medienquelle 27 ist über eine Leitung 28 mit dem Ventil 26 verbunden.

Wenn nun die Gaszusammensetzung des Reaktionsrestgases 30 über die Messvorrichtung 21 gemessen und in der Steuereinrichtung 22 analysiert worden ist, wird dem die Medienableitung 23 durchströmenden Restgas innerhalb der Vorrichtung 25 durch entsprechende Stellung des Ventils 26 soviel frisches Reaktionsgas 18 aus der Medienquelle 27 zugemischt, bis wieder die Ausgangszusammensetzung für die Reaktion erreicht wird. Anschließend kann das nunmehr frische Reaktionsgas 18 wieder zur Medienzuleitung 24 transportiert und über diese sowie den Einlass 15 in den Reaktorbehälter 11 eingespeist werden.

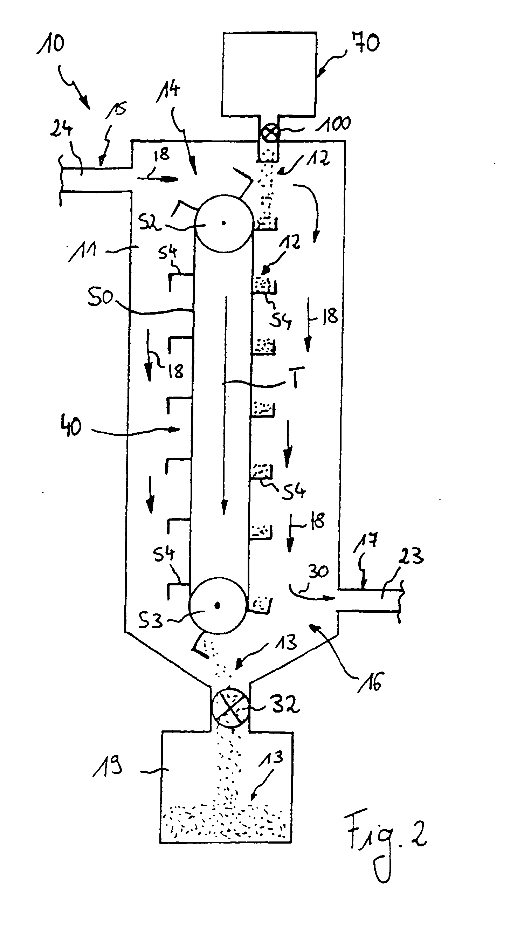

In Figur 2 ist ein etwas anderes Ausführungsbeispiel eines Reaktors 10 dargestellt. Während der Reaktorbehälter 11 des Reaktors 10 in Figur 1 eine horizontale Ausrichtung hatte, hat der Reaktorbehälter 11 des Reaktors gemäß Figur 2 eine vertikale, dass heißt senkrechte Ausrichtung. Die grundsätzliche Funktionsweise des Reaktors entspricht derjenigen aus Figur 1, sodass gleiche Bauteile mit identischen Bezugsziffern versehen sind und zur Vermeidung von Wiederholungen auf die Beschreibung im Zusammenhang mit Figur 1 verwiesen wird.

Im Unterschied zu Figur 1 ist die Fördereinrichtung 40, die wiederum ein Förderband 50 aufweist, jedoch modifiziert, da ansonsten das Katalysatormaterial 12 aufgrund der senkrechten Ausrichtung der Fördereinrichtung 40 nicht ohne Weiteres auf diesem verbleiben würde.

Aus diesem Grund weist das Förderband 50 gemäß Figur 2 eine Anzahl von Aufnahmebehältnissen 54 auf, bei denen es sich beispielsweise um kleine Schaufeln oder dergleichen handeln kann. Die Aufnahmebhältnisse 54 können jeweils kleine Mengen an Katalysatormaterial 12 aufnehmen. Der Herstellungsprozess des Kohlenstoff-Nanomaterials 13 durch Reaktion des Reaktionsgases 18 mit dem Katalysatormaterial 12 bleibt jedoch gleich.

Im Umkehrpunkt des Förderbands 50 im Bereich des Achselements 53 werden die Aufnahmebehältnisse 54 (ähnlich wie bei einem Wasserrad oder Schaufelrad) ausgeleert, sodass das hergestellte Kohlenstoff-Nanomaterial 13 aus den Aufnahmebehältnissen 54 in einen dafür vorgesehenen Sammelbehälter 19 gelangen kann.

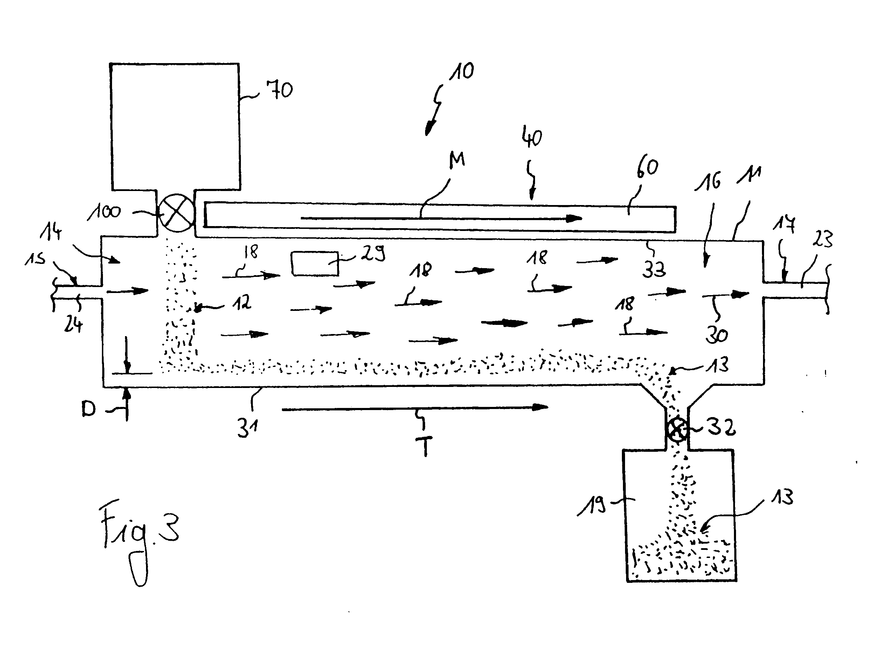

In Figur 3 ist ein weiteres Ausführungsbeispiel eines Reaktors 10 dargestellt, in dem die Fördereinrichtung 40 zum Materialtransport mittels eine magnetischen Feldes M ausgebildet ist.

Der Reaktor 10 weist wiederum wenigstens einen Reaktorbehälter 11 auf, in dessen Eintrittsbereich 14 Katalysatormaterial 12 über eine Vorrichtung 70 zum Zuführen von Katalysatormaterial sowie eine entsprechende Zufuhreinrichtung 100 in den Reaktorbehälter 11 eingespeist wird. Weiterhin ist ein Einlass 15 vorgesehen, der über eine Medienzuleitung 24 mit einer Medienquelle verbunden ist. Aus der Medienquelle wird das für die Reaktion benötigte Reaktionsgas 18 in den Reaktorbehälter eingespeist. Das am Ende der Reaktion verbleibende Reaktionsrestgas 30 wird im Austrittsbereich 16 des Reaktorbehälters über einen Auslass 17, der mit einer Medienableitung 23 verbunden ist, aus dem Reaktorbehälter 11 abgeleitet. Das entstandene Kohlenstoff-Nanomaterial 13 wird im Austrittsbereich 16 des Reaktorbehälters 11 in einem Sammelbehälter 19 aufgefangen.

Ähnlich wie bei den Figuren 1 und 2 ist auch bei dem Ausführungsbeispiel gemäß Figur 3 eine Fördereinrichtung 40 vorgesehen, mittels derer das Katalysatormaterial 12 in Transportrichtung T vom Eintrittsbereich 14 des Reaktorbehälters 11 hin zu dessen Austrittsbereich 16 transportiert wird. Während des Transports reagiert das Katalysatormaterial 12 mit dem Reaktionsgas 18, sodass während des Transports gleichzeitig auch das Kohlenstoff-Nanomaterial 13 ensteht.

Im Unterschied zu den Ausführungsbeispielen gemäß Figur 1 und 2 weist die Fördereinrichtung 40 gemäß Figur 3 jedoch eine Magneteinrichtung 60 auf, mittels derer außerhalb des Reaktorbehälters 11 ein bewegliches magnetisches Feld erzeugt wird, das sich in der Bewegungsrichtung M bewegt. Dabei entspricht die Bewegungsrichtung M des beweglichen Magnetfeldes der Transportrichtung T des im Reaktorbehälter 11 befindlichen Materials 12, 13.

Die Magneteinrichtung 60 ist im Bereich der Reaktorbehälterdecke 33 vorgesehen. Das Magnetfeld ist in der Magneteinrichtung 60 derart eingestellt, dass es in Bezug auf des Katalysatormaterial 12 solch eine anziehende Magnetkraft erzeugt, dass das Material 12,13 in einen Schwebezustand gebracht wird. In diesem Fall besteht das Katalysatormaterial 12 vorzugsweise aus einem ferromagnetischen Material, beispielsweise aus Eisen. Durch die von der Magneteinrichtung 60 erzeugten Magnetkräfte wird erreicht, dass das Katalysatormaterial 12 nach Eintritt in den Reaktorbehälter 11 in einem bestimmten Abstand D vom Reaktorbehälterboden 31 gehalten wird. Das Katalysatormaterial 12 befindet sich folglich im Reaktorbehälter 11 in einem Schwebezustand. Durch das sich bewegende Magnetfeld M wird das schwebende Katalysatormaterial 12 nunmehr in Transportrichtung T durch den Reaktorbehälter 11 transportiert. Dabei setzen sich die Kohlenstoffatome an dem Katalysatormaterial 12 an, sodass schließlich die Kohlenstoff-Nanofasern 13 entstehen.

Dabei tritt jedoch die Situation auf, dass das entstehende Kohlenstoff-Nanomaterial 13, das auf dem Katalysator 12 aufwächst, bei dem Transport durch den Reaktorbehälter 11 in Richtung des Austrittsbereichs 16 zunehmend schwerer wird. Da sich die Größe des Magnetfeldes jedoch nicht ändert, wird irgendwann die Situation auftreten, dass die Materialien innerhalb des Reaktorbehälters 11 ab einer bestimmten Masse durch die magnetischen Kräfte nicht mehr gehalten werden können und folglich auf den Reaktorbehälterboden 31 fallen.

Folglich wird der Auslass 19 aus dem Reaktorbehälter 11 vorteilhaft dort angebracht, wo das hergestellte Kohlenstoff-Nanomaterial 13 zu Boden geht. Eine solche Ausgestaltung der Fördereinrichtung 40 hat den Vorteil, dass das Kohlenstoff-Nanomaterial 13 immer dann zu Boden fällt, wenn es eine bestimmte Masse erreicht hat. Wenn das auf den Reaktorbehälterboden 31 herabfallende Kohlenstoff-Nanomaterial 13 dann aus dem Reaktorbehälter 11 entnommen wird, hat dies zur Folge, dass das entnommene Kohlenstoff-Nanomaterial 13 stets die gleiche Masse hat. Auf diese Weise kann mit dem Reaktor 10 nicht nur eine kontinuierliche, sondern auch eine besonderes homogene Herstellung von Kohlenstoff-Nanomaterial 13 erfolgen.

Um den Innenraum des Reaktorbehälters 11 auf eine gewünschte Prozesstemperatur zu erhitzen oder zu kühlen, ist eine geeignete Einrichtung 29 zum Einstellen einer bestimmten Temperatur vorgesehen, beispielsweise in Form eines Wärmetauschers. Diese Einrichtung 29 kann natürlich auch in den anderen Ausführungsbeispielen gemäß den Figuren 1 und 2 eingesetzt werden.

Einen besonderen Faktor für die kontinuierliche Herstellung von Kohlenstoff-Nanomaterial 13 stellt die Vorrichtung 70 zum Zuführen von Katalysatormaterial in den Reaktorbehälter dar. Diese Vorrichtung 70 wird nachfolgend unter Bezugnahme auf die Figur 4 im Detail beschrieben.

Beispielsweise kann vorgesehen sein, dass es sich bei dem dem Reaktorbehälter zugeführten Katalysatormaterial um ein Metall, beispielsweise Eisen (Fe) handelt. Ein solches Katalysatormaterial wird aus Sicherheitsgründen jedoch in oxidierter Form, bei Eisen beispielsweise in Form von Fe₂O₃ gelagert, muss aber vor der im Reaktorbehälter 11 stattfindenden Reaktion reduziert werden. In der reduzierten Form ist das Katalysatormaterial jedoch sehr explosiv, sodass eine Zufuhr des Katalysatormaterials in den Reaktorbehälter 11 nicht ohne Weiteres möglich ist.

Um eine kontinuierliche Zuführung von Katalysatormaterial in den Reaktorbehälter 11 zu gewährleisten, weist die Vorrichtung 70 insgesamt drei Behälter auf, wobei ein Behälter 74 als Aufnahmebehälter, ein Behälter 85 als Einwirkbehälter und ein Behälter 94 als Dosierbehälter fungiert.

Der Aufnahmebehälter 74 ist mit einer Einfülleinrichtung 71 verbunden, bei der es sich im vorliegenden Beispiel um eine Art Trichter handelt. Dazu ist die Einfülleinrichtung über ein entsprechendes Verbindungselement 72, im vorliegenden Beispiel eine Verbindungsleitung, mit einem Behältereinlass 75 des Behälters 74 verbunden. Damit der Behälterinnenraum 77 des Behälters 74 abgeschlossen werden kann, ist in der Verbindungsleitung 72 ein Verschlusselement 73 vorgesehen, über das die Verbindung zwischen Einfülleinrichtung 71 und Behälter 74 je nach Wunsch geöffnet beziehungsweise geschlossen werden kann. Bei dem Verschlusselement 73 handelt es sich vorteilhaft um ein geeignetes Schleusenelement. Der Behälter 74 verfügt weiterhin über einen Behälterauslass 76, der wiederum mit einem Verbindungselement 78 in Form einer Verbindungsleitung verbunden ist. Über das Verbindungselement 78, in dem sich ein geeignetes Verschlusselement 79 befinden kann, ist der Behälter 74 mit dem nachfolgenden Behälter 85 verbunden. Bei dem Verschlusselement 79 kann es sich wiederum um ein geeignetes Schleusenelement handeln.

Schließlich weist der Behälter 74 noch einen Medieneinlass 80 sowie einen Medienauslass 81 auf. Darüber kann der Behälterinnenraum 77 mit einem geeigneten Medium geflutet werden. Das entsprechende Medium wird über den Medieneinlass 80 in den Behälterinnenraum 77 eingebracht und nach Abschluss der Reaktion über den Medienauslass 81 erneut entfernt.

Schließlich ist der Behälter 74 noch mit einer Einrichtung 82 zum Einstellen eines bestimmten Drucks verbunden, über die im Behälterinnenraum 77 ein geeigneter Druck eingestellt werden kann, beispielsweise ein Unterdruck oder ein Vakuum. Dazu weist die Einrichtung 82 eine entsprechende Pumpe 83 auf, die über eine Leitung 84 mit dem Behälterinnenraum 77 verbunden ist. Ebenso kann - je nach Bedarf - über die Einrichtung 82 auch ein Überdruck eingestellt werden.

An den Aufnahmebehälter 74 schließt sich der weitere Behälter 85 an, bei dem es sich im vorliegenden Beispiel um einen Einwirkbehälter handelt. Das bedeutet, dass in dem Einwirkbehälter 85 in bestimmter Weise auf das Katalysatormaterial eingewirkt wird, sodass dieses für seinen nachfolgenden Einsatz im Reaktorbehälter 11 aufbereitet wird.

Im vorliegenden Beispiel wird das Katalysatormaterial zunächst in Form eines Metalloxids in den Aufnahmebehälter 74 eingebracht, sodass es vor seiner eigentlichen Verwendung noch reduziert werden muss. Dies geschieht im Einwirkbehälter 85, der somit die Funktion eines Reduzierbehälters übernimmt. Der Einwirkbehälter 85 ist über einen Behältereinlass 86 und das Verbindungselement 78 mit Verschlusselement 79 mit dem Aufnahmebehälter 74 verbunden. Über einen Behälterauslass 87 ist der Behälter 85 mit einem Verbindungselement 89, im vorliegenden Fall einer Verbindungsleitung, verbunden. In dem Verbindungselement 89 ist wiederum ein in Form einer entsprechenden Schleuse ausgebildetes Verschlusselement 90 vorgesehen. Mittels des Verbindungselements 89 ist der Behälter 85 mit dem sich anschließenden Behälter 94, im vorliegenden Beispiel einem Dosierbehälter, verbunden.

Der Behälter 85 verfügt wiederum über einen Medieneinlass 91 und einen Medienauslass 92, worüber der Behälterinnenraum 88 mit einem geeigneten Medium beaufschlagt beziehungsweise geflutet werden kann. Schließlich ist im Behälter 85 noch eine Einrichtung 93 zum Einstellen einer bestimmten Temperatur vorgesehen, mittels derer der Behälterinnenraum 88 beziehungsweise das im Behälter 85 befindliche Katalysatormaterial zur Durchführung der Reaktionen auf die geeignete Reaktionstemperatur gebracht - beispielsweise geheizt oder gekühlt - werden kann.

Im Anschluss an den Einwirkbehälter 85 ist schließlich der Dosierbehälter 94 vorgesehen, in dem das reduzierte Katalysatormaterial vor dem eigentlichen Einsatz im Reaktorbehälter 11 zwischengelagert wird. Dazu ist der Dosierbehälter 94 über einen Behältereinlass 95 zunächst mit dem Verbindungselement 89 unter über dieses mit dem Einwirkbehälter 85 verbunden. Weiterhin verfügt der Behälter 94 über einen Behälterauslass 96, der über ein entsprechendes Verbindungselement 98, im vorliegenden Fall eine Verbindungsleitung, mit dem Reaktorbehälter 11 verbunden ist. Über das Verbindungselement 98 und den Behälterauslass 96 wird das im Behälterinnenraum 97 befindliche Katalysatormaterial dem Reaktorbehälter 11 zugeführt.

Dazu ist eine geeignete Zuführeinrichtung 100 vorgesehen, bei der es sich beispielsweise um eine Transportschnecke oder dergleichen handeln kann. Je nach Anwendungsfall kann der Dosierbehälter 94 mit einer geeigneten Evakuiereinrichtung (nicht dargestellt) oder mit bestimmten Medieneinlässen und Medienauslässen (ebenfalls nicht dargestellt) verbunden sein.

Nachfolgend wird nun die Funktionsweise der Vorrichtung 70 zum Zuführen von Katalysatormaterial beschrieben.

Um für die Herstellung von Kohlenstoff-Nanomaterial innerhalb des Reaktorbehälters 11 ein geeignetes Katalysatormaterial in Form von Eisen (Fe) herstellen zu können, wird zunächst ein Metalloxid (Fe₂O₃) über die Einfülleinrichtung 71 in den Aufnahmebehälter 74 eingefüllt. Durch eine entsprechende Stellung der Verschlusselemente 73 und 79 wird der Aufnahmebehälter anschließend verschlossen. Der Behälterinnenraum 77 wird über die Einrichtung 82 auf den erforderlichen Druck. Anschließend kann der Behälterinnenraum 77 über den Medieneinlass 80 beziehungsweise den Medienauslass 81 mit einem Inertgas geflutet werden. Der Druck-Einstellungs- und/oder Flutungsschritt kann je nach Bedarf ein oder mehrmals durchgeführt beziehungsweise wiederholt werden. Der Zweck dieser Vorgehensweise liegt darin, Sauerstoff oder andere Stoff, die auf der Oberfläche des Metalloxids adsorbiert sind, zu entfernen.

Nach Beendigung dieser Schritte wird das Verschlusselement 79 geöffnet, sodass das Katalysatormaterial in den Einwirkbehälter 85 eintreten kann. In dem Einwirkbehälter 85 wird das Katalysatormaterial anschließend reduziert. Dies erfolgt beispielsweise dadurch, dass der Behälterinnenraum 88 über den Medieneinlass 91 beziehungsweise den Medienauslass 92 mit einem geeigneten Reduziergas geflutet beziehungsweise von einem solche Reduziergas durchströmt wird. Geeignete Bespiele für Reduziergase sind Gemische aus Wasserstoff und/oder Helium und/oder Stickstoff, etwa das sogenannte "Formiergas". Die Erfindung ist jedoch nicht auf die genannten Gastypen beschränkt.

Damit die Reaktion ordnungsgemäß ablaufen kann, ist es erforderlich, dass der Behälterinnenraum 88 beziehungsweise das darin befindliche Katalysatormaterial auf eine geeignete Reaktionstemperatur gebracht wird. Im vorliegenden Beispiel liegt die geeignete Reaktionstemperatur zwischen 300 und 600 °C . Die erforderliche Temperatur wird über die Einrichtung 93 eingestellt.

Zusätzlich zu den zuvor beschriebenen Reaktionen kann vorgesehen sein, dass der Behälterinnenraum 88 noch mit einem Inertgas geflutet wird. Auf diese Weise wird erreicht, dass auch restliche Bestandteile von Wasser wirksam vom Katalysatormaterial entfernt werden können.

Im Einwirkbehälter 85 entsteht das für die Reaktion im Reaktorbehälter 11 benötigte Katalysatormaterial 12, im vorliegenden Beispiel beispielsweise reines Eisen (Fe). Nach Beendigung der Reaktionen im Einwirkbehälter 85 wird das Verschlusselement 90 geöffnet, sodass das Katalysatormaterial in den Dosierbehälter 94 eintreten kann. Je nach Anwendungsfall kann vorgesehen sein, dass der Behälterinnenraum 97 des Dosierbehälters 94 beziehungsweise das darin befindliche Katalysatormaterial abschließend noch einmal mit Inertgas gespült wird. Hauptsächlich dient der Dosierbehälter 94 jedoch als Zwischenspeicher für das im Einwirkbehälter 85 erzeugte Katalysatormaterial. Weiterhin bietet er die Möglichkeit, das Katalysatormateril unter Inert-Atmosphäre zu speichern, so daß im Dosierbehälter 94 keine Reaktionen stattfinden.

Über die Zufuhreinrichtung 100, bei der es sich beispielsweise um eine Zufuhrschnecke oder dergleichen handelt, kann das Katalysatormaterial in besonders einfacher Weise dem Reaktorbehälter 11 zugeführt werden. Dabei ist die Zufuhreinrichtung 100 insbesondere in solch einer Weise ausgebildet, dass eine gasdichte Zugabe des Katalysatormaterials in den Reaktorbehälter 11 möglich ist, ohne dass Reaktionsgas 18 aus dem Reaktorbehälter 11 über das Verbindungselement 98 in den Dosierbehälter 94 einströmen kann.

In dem Reaktorbehälter 11 wird anschließend das Kohlenstoff-Nanomaterial 13, beispielsweise in Form von Kohlenstoff-Nanofasern oder dergleichen, hergestellt.

### Bezugszeichenliste

- 10: Reaktor
- 11: Reaktorbehälter
- 12: Katalysatormaterial
- 13: Kohlenstoff-Nanomaterial
- 14: Eintrittsbereich
- 15: Einlass
- 16: Austrittsbereich
- 17: Auslass
- 18: Reaktionsgas
- 19: Vorrichtung zur Aufnahme von Kohlenstoff-Nanomaterial (Sammelbehälter)
- 20: Mittel zum Austragen von Material
- 21: Vorrichtung zur Messung der Gaszusammensetzung
- 22: Steuereinrichtung
- 23: Medienableitung
- 24: Medienzuleitung
- 25: Vorrichtung zum Erzeugen/Aufbereiten von Reaktionsgas
- 26: Ventil
- 27: Medienquelle
- 28: Leitung
- 29: Einrichtung zum Einstellen einer bestimmten Temperatur
- 30: Reaktionsrestgas
- 31: Reaktorbehälterboden
- 32: Verschlußelement (Schleuse)
- 33: Reaktorbehälterboden

- 40: Fördereinrichtung
- 50: Förderband

- 51: Antrieb
- 52: Achselement
- 53: Achselement
- 54: Aufnahmebehältnis
- 60: Magneteinrichtung

- 70: Vorrichtung zum Zuführen von Katalysatormaterial in den Reaktorbehälter
- 71: Einfülleinrichtung
- 72: Verbindungselement
- 73: Verschlusselement
- 74: Behälter (Aufnahmebehälter)
- 75: Behältereinlass
- 76: Behälterauslass
- 77: Behälterinnenraum
- 78: Verbindungselement
- 79: Verschlusselement
- 80: Medieneinlass
- 81: Medienauslass
- 82: Einrichtung zum Einstellen eines bestimmten Drucks
- 83: Pumpe
- 84: Leitung
- 85: Behälter (Einwirkbehälter)
- 86: Behältereinlass
- 87: Behälterauslass
- 88: Behälterinnenraum
- 89: Verbindungselement
- 90: Verschlusselement
- 91: Medieneinlass
- 92: Medienauslass
- 93: Einrichtung zum Einstellen einer bestimmten Temperatur
- 94: Behälter (Dosierbehälter)

- 95: Behältereinlass
- 96: Behälterauslass
- 97: Behälterinnenraum
- 98: Verbindungselement

- 100: Zufuhreinrichtung

- T: Transportrichtung des Materials innerhalb des Reaktorbehälters
- M: Richtung des sich bewegenden Magnetfelds
- D: Abstand des Katalysatormaterials zur Behälterwand

## Patentansprüche

1. Reaktor zum Herstellen von Kohlenstoff-Nanomaterial (13), insbesondere zum Herstellen von Kohlenstoff-Nanofasem, mit wenigstens einem Reaktorbehälter (11) zur Aufnahme eines Katalysatormaterials (12) und zum Einwirken auf das Katalysatormaterial (12), wobei das Kohlenstoff-Nanomaterial (13) auf der Basis des Katalysatormaterials (12) herstellbar ist beziehungsweise hergestellt wird, **dadurch gekennzeichnet, dass** der Reakorbehälter (11) einen Eintrittsbereich (14) für das Katalysatormaterial (12) und einen Austrittsbereich (16) zur Entnahme des hergestellten Kohlenstoff-Nanomaterials (13) aufweist, dass zur kontinuierlichen Herstellung von Kohlenstoff-Nanomaterial (13) innerhalb des Reaktorbehälters (11) eine Fördereinrichtung (40) vorgesehen ist und dass die Fördereinrichtung (40) zum Materialtransport vom Eintrittsbereich (14) des Reaktorbehälters-(11) hin zu dessen Austrittsbereich (16) ausgebildet ist.

2. Reaktor nach Anspruch 1, **dadurch gekennzeichnet, dass** dieser zur Herstellung von Kohlenstoff-Nanomaterial (13) auf der Basis eines CVD-Verfahrens ausgebildet ist.

3. Reaktor nach Anspruch 1 oder 2, **dadurch gekennzeichnet, dass** im Eintrittsbereich (14) des Reaktorbehälters (11) wenigstens ein Einlass (15) für wenigstens ein Reaktionsgas (18) vorgesehen ist und dass im Austrittsbereich (16) des Reaktorbehälters (11) wenigstens ein Auslass (17) für wenigstens ein Reaktions-Restgas (30) vorgesehen ist.

4. Reaktor nach einem der Ansprüche 1 bis 3, **dadurch gekennzeichnet, dass** sich die Fördereinrichtung (40) vom Eintrittsbereich (14) des Reaktorbehälters (11) hin zu dessen Austrittsbereich (16) erstreckt.

5. Reaktor nach einem der Ansprüche 1 bis 4, **dadurch gekennzeichnet, dass** im Eintrittsbereich (14) des Reaktorbehälters (11) wenigstens eine Vorrichtung (70) zum Zuführen von Katalysatormaterial (12) vorgesehen ist.

6. Reaktor nach Anspruch 5, **dadurch gekennzeichnet, dass** die Vorrichtung (70) zum Zuführen von Katalysatormaterial (12) wenigstens zwei Behälter (74, 85, 94) aufweist, die zum Stoffaustausch über ein Verbindungselement (78, 89) miteinander verbunden sind, dass wenigstens einer der Behälter (74) zur Aufnahme des Katalysatormaterials (12) ausgebildet ist, dass wenigstens einer der Behälter (94) zum Zudosieren des Katalysatormaterials (12) in den Reaktorbehälter (11) ausgebildet ist und dass wenigstens ein Dosierbehälter (94) ein Verbindungselement (98) zur Verbindung mit dem Reaktorbehälter (11) und zum Zuführen des Katalysatormaterials (12) in den Reaktorbehälter (11) aufweist.

7. Reaktor nach Anspruch 5 oder 6, **dadurch gekennzeichnet, dass** die Vorrichtung (70) zum Zuführen von Katalysatormaterial (12) wenigstens einen weiteren Behälter (85) aufweist, der zum Einwirken auf das Katalysatormaterial (12) ausgebildet ist, der zwischen dem Aufnahmebehälter (74) und dem Dosierbehälter (94) angeordnet ist und der zum Stoffaustausch über jeweils ein Verbindungselement (78, 89) mit dem Aufnahmebehälter (74) und dem Dosierbehälter (94) verbunden ist.

8. Reaktor nach Anspruch 7, **dadurch gekennzeichnet, dass** der wenigstens eine, weitere Behälter (85) als Reduzierbehälter ausgebildet ist.

9. Reaktor nach einem der Ansprüche 5 bis 8, **dadurch gekennzeichnet, dass** in zumindest einzelnen Verbindungselementen (72, 78, 89) wenigstens ein Verschlußelement (73, 79, 90) vorgesehen ist.

10. Reaktor nach einem der Ansprüche 5 bis 9, **dadurch gekennzeichnet, dass** eine Zufuhreinrichtung (100) zum Zuführen von Katalysatormaterial (12) aus der Vorrichtung (70) zum Zuführen von Katalysatormaterial in den Reaktorbehälter (11) vorgesehen ist.

11. Reaktor nach einem der Ansprüche 1 bis 10, **dadurch gekennzeichnet, dass** im Austrittsbereich (16) des Reaktorbehälters (11) eine Vorrichtung (19) zur Aufnahme des hergestellen Kohlenstoff-Nanomaterials (13) vorgesehen ist.

12. Reaktor nach einem der Ansprüche 1 bis 11, **dadurch gekennzeichnet, dass** wenigstens einer der Reaktorbehälter (11) horizontal ausgerichtet ist.

13. Reaktor nach einem der Ansprüche 1 bis 12, **dadurch gekennzeichnet, dass** wenigstens einer der Reaktorbehälter (11) vertikal ausgerichtet ist.

14. Reaktor nach einem der Ansprüche 1 bis 13, **dadurch gekennzeichnet, dass** die Fördereinrichtung (40) in wenigstens einem der Reaktorbehälter (11) zum Materialtransport mittels eines magnetischen Feldes ausgebildet ist.

15. Reaktor nach Anspruch 14, **dadurch gekennzeichnet, dass** die Fördereinrichtung (40) wenigstens eine Magneteinrichtung (60) aufweist, mittels derer innerhalb oder ausserhalb des Reaktorbehälters (11) ein bewegliches magnetisches Feld (M) erzeugbar ist beziehungsweise erzeugt wird.

16. Reaktor nach Anspruch 14 oder 15, **dadurch gekennzeichnet, dass** in der Magneteinrichtung (60) eine definierte, auf ein vorgegebenes Gewicht des hergestellten Kohlenstoff-Nanomaterials (13) bezogene Magnetkraft einstellbar ist beziehungsweise eingestellt wird.

17. Reaktor nach Anspruch 16, **dadurch gekennzeichnet, dass** in der Magneteinrichtung (60) eine in Richtung (M) des sich bewegenden Magnetfelds veränderliche oder veränderte Magnetkraft einstellbar ist beziehungsweise eingestellt wird.

18. Reaktor nach einem der Ansprüche 1 bis 17, **dadurch gekennzeichnet, dass** die Fördereinrichtung (40) in wenigstens einem der Reaktorbehälter (11) als umlaufende Förderschleife ausgebildet ist.

19. Reaktor nach Anspruch 18, **dadurch gekennzeichnet, dass** die Förderschleife als Förderband (50) ausgebildet ist.

20. Reaktor nach Anspruch 19, **dadurch gekennzeichnet, dass** an dem Förderband (50) eine Anzahl von Aufnahmebehältnissen (54) angeordnet sind.

21. Reaktor nach Anspruch 19 oder 20, **dadurch gekennzeichnet, dass** das Förderband (50) aus einem Material mit guten Hafteigenschaften für das Katalysatormaterial (12) und das entstehende Kohlenstoff-Nanomaterial (13) besteht.

22. Reaktor nach einem der Ansprüche 1 bis 21, **dadurch gekennzeichnet, dass** im Austrittsbereich (16) des Reaktorbehälters (11) Mittel (20) zum Austragen des hergestellten Kohlenstoff-Nanomaterials (13) aus dem Reaktorbehälter (11) vorgesehen sind.

23. Reaktor nach Anspruch 22, **dadurch gekennzeichnet, dass** die Mittel (20) zum Austragen als Abstreifelement und/oder Abstreifgitter ausgebildet sind.

24. Reaktor nach einem der Ansprüche 1 bis 23, **dadurch gekennzeichnet, dass** der Antrieb (51) der Fördereinrichtung (40) ausserhalb des Reaktorbehälters (11) angeordnet ist.

25. Reaktor nach einem der Ansprüche 1 bis 24, **dadurch gekennzeichnet, dass** im Austrittsbereich (16) des Reaktorbehälters (11) wenigstens eine Vorrichtung (21) zur Messung der Gaszusammensetzung des Reaktionsrestgases (30) vorgesehen ist.

26. Reaktor nach einem der Ansprüche 1 bis 25, **dadurch gekennzeichnet, dass** im Austrittsbereich (16) des Reaktorbehälters (11) wenigstens eine Medienableitung (23) zum Ableiten von Reaktionsrestgas (30) vorgesehen ist.

27. Reaktor nach Anspruch 26, soweit auf einen der Ansprüche 3 bis 25 rückbezogen, **dadurch gekennzeichnet, dass** der Auslass (17) des Reaktorbehälters (11) mit wenigstens einer Medienableitung (23) verbunden ist.

28. Reaktor nach Anspruch 26 oder 27, **dadurch gekennzeichnet, dass** in der Medienableitung (23) eine Vorrichtung (25) zum Erzeugen/Aufbereiten von Reaktionsgas (18) vorgesehen ist oder dass die Medienableitung (23) des Reaktorbehälters (11) zumindest zeitweilig mit einer Vorrichtung (25) zum Erzeugen/Aufbereiten von Reaktionsgas (18) verbunden ist.

29. Reaktor nach einem der Ansprüche 26 bis 28, **dadurch gekennzeichnet, dass** in der Medienableitung (23) eine Trenneinrichtung zum Abtrennen von bestimmten Komponenten aus dem Reaktionsrestgas (30) vorgesehen ist oder dass die Medienableitung (23) zumindest zeitweilig mit einer solchen Trenneinrichtung verbunden ist.

30. Reaktor nach einem der Ansprüche 1 bis 29, **dadurch gekennzeichnet, dass** für wenigstens einen Reaktorbehälter (11) wenigstens eine Einrichtung (29) zum Einstellen einer bestimmten Temperatur vorgesehen ist.

31. Verfahren zum Herstellen von Kohlenstoff-Nanomaterial in einem Reaktor mit wenigstens einem Reaktorbehälter, **dadurch gekennzeichnet, dass** ein Katalysatormaterial in einem Eintrittsbereich wenigstens eines Reaktorbehälters in diesen eingebracht wird, dass das Katalysatormaterial mittels einer Fördereinrichtung durch den Reaktorbehälter transportiert wird, wobei ein in dem Reaktorbehälter befindliches Reaktionsgas auf das Katalysatormaterial einwirkt, wodurch das Kohlenstoff-Nanomaterial entsteht und dass das hergestellte Kohlenstoff-Nanomaterial im Austrittsbereich des Reaktorbehälters aus diesem entnommen wird.

32. Verfahren nach Anspruch 31, **dadurch gekennzeichnet, dass** dieses zur kontinuierlichen Herstellung von Kohlenstoff-Nanomaterial ausgebildet ist.

33. Verfahren nach Anspruch 31 oder 32, **dadurch gekennzeichnet, dass** dieses als CVD-Verfahren ausgebildet ist.

34. Verfahren nach einem der Ansprüche 31 bis 33, **dadurch gekennzeichnet, dass** dieses in einem Reaktor nach einem der Ansprüche 1 bis 30 durchgeführt wird.

## Claims

1. Reactor for producing carbon nanomaterial (13), particularly for producing carbon nanofibres, having at least one reactor container (11) for receiving a catalyst material (12) and for acting on the catalyst material (12), the carbon nanomaterial (13) being producible, or produced, on the basis of the catalyst material, **characterised in that** the reactor container (11) has an entry zone (14) for the catalyst material (12) and an exit zone (16) for the removal of the carbon nanomaterial (13) produced, **in that** a conveyor means (40) is provided inside the reactor container (11) for the continuous production of carbon nanomaterial (14) and **in that** the conveyor means (40) is configured for transporting material from the entry zone (14) of the reactor container (11) to the exit zone (16) thereof.

2. Reactor according to claim 1, **characterised in that** it is configured for the manufacture of carbon nanomaterial (13) on the basis of a CVD process.

3. Reactor according to claim 1 or 2, **characterised in that** at least one inlet (15) for at least one reaction gas (18) is provided in the entry zone (14) of the reactor container (11) and **in that** at least one outlet (17) for at least one residual reaction gas (30) is provided in the exit zone (16) of the reactor container (11).

4. Reactor according to one of claims 1 to 3, **characterised in that** the conveyor means (40) extends from the entry zone (14) of the reactor container (11) to the exit zone (16) thereof.

5. Reactor according to one of claims 1 to 4, **characterised in that** at least one device (70) for supplying catalyst material (12) is provided in the entry zone (14) of the reactor container (11).

6. Reactor according to claim 5, **characterised in that** the device (70) for supplying catalyst material (12) comprises at least two containers (74, 85, 94) which are joined together via a connecting element (78, 89) for the exchange of materials, **in that** at least one of the containers (74) is configured to receive the catalyst material (12), **in that** at least one of the containers (94) is configured for metering the catalyst material (12) into the reactor container (11) and **in that** at least one metering container (94) comprises a connecting element (98) for connection to the reactor container (11) and for supplying the catalyst material (12) into the reactor container (11).

7. Reactor according to claim 5 or 6, **characterised in that** the device (70) for supplying catalyst material (12) comprises at least one further container (85) which is configured to act on the catalyst material (12), which is arranged between the receiving container (74) and the metering container (94) and which is connected to the receiving container (74) and to the metering container (94) via a connecting element (78, 89) in each case, for the exchange of materials.

8. Reactor according to claim 7, **characterised in that** the at least one further container (85) is configured as a reducing container.

9. Reactor according to one of claims 5 to 8, **characterised in that** at least one closure element (73, 79, 90) is provided in at least individual connecting elements (72, 78, 89).

10. Reactor according to one of claims 5 to 9, **characterised in that** a supply device (100) is provided for supplying catalyst material (12) from the device (70) for supplying catalyst material into the reactor container (11).

11. Reactor according to one of claims 1 to 10, **characterised in that** a device (19) for receiving the carbon nanomaterial (13) produced is provided in the exit zone (16) of the reactor container (11).

12. Reactor according to one of claims 1 to 11, **characterised in that** at least one of the reactor containers (11) is aligned horizontally.

13. Reactor according to one of claims 1 to 12, **characterised in that** at least one of the reactor containers (11) is aligned vertically.

14. Reactor according to one of claims 1 to 13, **characterised in that** the conveyor means (40) in at least one of the reactor containers (11) is configured to transport material by means of a magnetic field.

15. Reactor according to claim 14, **characterised in that** the conveyor means (40) has at least one magnetic device (60) by means of which a movable magnetic field (M) is or can be generated inside or outside the reactor container (11).

16. Reactor according to claim 14 or 15, **characterised in that** a defined magnetic force related to a given weight of the carbon nanomaterial (13) produced is selected or selectable within the magnetic device (60).

17. Reactor according to claim 16, **characterised in that** a magnetic force that varies or is variable in the direction (M) of the moving magnetic field is selected or selectable in the magnetic device (60).

18. Reactor according to one of claims 1 to 17, **characterised in that** the conveyor means (40) in at least one of the reactor containers (11) is configured as a revolving conveyor loop.

19. Reactor according to claim 18, **characterised in that** the conveyor loop is configured as a conveyor belt (50).

20. Reactor according to claim 19, **characterised in that** a number of receiving conveyors (54) are arranged on the conveyor belt (50).

21. Reactor according to claim 19 or 20, **characterised in that** the conveyor belt (50) consists of a material with good adhesive properties for the catalyst material (12) and the carbon nanomaterial (13) being formed.

22. Reactor according to one of claims 1 to 21, **characterised in that** means (20) for discharging the carbon nanomaterial (13) produced from the reactor container (11) are provided in the exit zone (16) of the reactor container (11).

23. Reactor according to claim 22, **characterised in that** the discharging means (20) are configured as a scraper element and/or scraper mesh.

24. Reactor according to one of claims 1 to 23, **characterised in that** the drive (51) of the conveyor means (40) is arranged outside the reactor container (11).

25. Reactor according to one of claims 1 to 24, **characterised in that** at least one device (21) for measuring the gas composition of the residual reaction gas (30) is provided in the exit zone (16) of the reactor container (11).

26. Reactor according to one of claims 1 to 25, **characterised in that** at least one media drainage pipe (23) is provided in the exit zone (16) of the reactor container (11) for draining off residual reaction gas (30).

27. Reactor according to claim 26, where it is dependent on one of claims 3 to 25, **characterised in that** the outlet (17) of the reactor container (11) is connected to at least one media drainage pipe (23).

28. Reactor according to claim 26 or 27, **characterised in that** a device (25) for producing/providing reaction gas (18) is provided in the media drainage pipe (23) or in that the media drainage pipe (23) of the reactor container (11) is at least intermittently connected to a device (25) for producing/providing reaction gas (18).

29. Reactor according to one of claims 26 to 28, **characterised in that** a separating device for separating specific components from the residual reaction gas (30) is provided in the media drainage pipe (23) or **in that** the media drainage pipe (23) is at least intermittently connected to a separating device of this kind.

30. Reactor according to one of claims 1 to 29, **characterised in that** at least one device (29) for selecting a specific temperature is provided for at least one reactor container (11).

31. Method of producing carbon nanomaterial in a reactor having at least one reactor container, **characterised in that** a catalyst material in an entry zone of at least one reactor container is introduced into said container, **in that** the catalyst material is transported through the reactor container by a conveyor means, while a reaction gas contained in the reactor container acts on the catalyst material, as a result of which the carbon nanomaterial is formed, and **in that** the resulting carbon nanomaterial located in the exit zone of the reactor container is removed therefrom.

32. Method according to claim 31, **characterised in that** it is configured for the continuous production of carbon nanomaterial.

33. Method according to claim 31 or 32, **characterised in that** it is configured as a CVD process.

34. Method according to one of claims 31 to 33, **characterised in that** it is carried out in a reactor according to one of claims 1 to 30.

## Revendications

1. Réacteur de production de nanomatériau en carbone (13), en particulier de production de nanofibres en carbone, avec au moins une cuve de réacteur (11) pour loger un matériau catalyseur (12) et pour agir sur le matériau catalyseur (12), le nanomatériau en carbone (13) pouvant être produit ou est produit sur la base du matériau catalyseur (12), **caractérisé en ce que** la cuve de réacteur (11) présente une zone d'entrée (14) pour le matériau catalyseur (12) et une zone de sortie (16) pour le prélèvement du nanomatériau en carbone produit (13), **en ce qu'**un dispositif de transport (40) est prévu pour la production continue de nanomatériau en carbone (13) dans la cuve de réacteur (11) et **en ce que** le dispositif de transport (40) est réalisé pour le transport de matériau de la zone d'entrée (14) de la cuve de réacteur (11) vers sa zone de sortie (16).

2. Réacteur selon la revendication 1, **caractérisé en ce que** celui-ci est réalisé pour la production de nanomatériau en carbone (13) sur la base d'un procédé CVD.

3. Réacteur selon la revendication 1 ou 2, **caractérisé en ce qu'**au moins une admission (15) pour au moins un gaz de réaction (18) est prévue dans la zone d'entrée (14) de la cuve de réacteur (11) et **en ce qu'**au moins une évacuation (17) pour au moins un gaz de réaction résiduel (30) est prévue dans la zone de sortie (16) de la cuve de réacteur (11).

4. Réacteur selon l'une quelconque des revendications 1 à 3, **caractérisé en ce que** le dispositif de transport (40) s'étend de la zone d'entrée (14) de la cuve de réacteur (11) vers sa zone de sortie (16).

5. Réacteur selon l'une quelconque des revendications 1 à 4, **caractérisé en ce qu'**au moins un dispositif (70) pour l'amenée de matériau catalyseur (12) est prévu dans la zone d'entrée (14) de la cuve de réacteur (11).

6. Réacteur selon la revendication 5, **caractérisé en ce que** le dispositif (70) pour l'amenée de matériau catalyseur (12) présente au moins deux récipients (74, 85, 94) qui sont reliés entre eux pour l'échange de substance par un élément de liaison (78, 89), **en ce qu'**au moins l'un des récipients (74) est réalisé pour le logement du matériau catalyseur (12), **en ce qu'**au moins l'un des récipients (94) est réalisé pour l'ajout dosé du matériau catalyseur (12) dans la cuve de réacteur (11) et **en ce qu'**au moins un récipient doseur (94) présente un élément de liaison (98) pour la liaison avec la cuve de réacteur (11) et pour l'amenée de matériau catalyseur (12) dans la cuve de réacteur (11).

7. Réacteur selon la revendication 5 ou 6, **caractérisé en ce que** le dispositif (70) pour l'amenée de matériau catalyseur (12) présente au moins un autre récipient (85) qui est réalisé pour agir sur le matériau catalyseur (12), est disposé entre le bac de réception (74) et le récipient doseur (94) et est relié pour l'échange de substance respectivement par un élément de liaison (78, 79) au bac de réception (74) et au récipient doseur (94).

8. Réacteur selon la revendication 7, **caractérisé en ce qu'**au moins un autre récipient (85) est réalisé comme un récipient de réduction.

9. Réacteur selon l'une quelconque des revendications 5 à 8, **caractérisé en ce qu'**au moins un élément de fermeture (73, 79, 90) est prévu dans des éléments de liaison au moins individuels (72, 78, 89).

10. Réacteur selon l'une quelconque des revendications 5 à 9, **caractérisé en ce qu'**un dispositif d'amenée (100) est prévu pour l'amenée de matériau catalyseur (12) du dispositif (70) pour l'amenée de matériau catalyseur dans la cuve de réacteur (11).

11. Réacteur selon l'une quelconque des revendications 1 à 10, **caractérisé en ce qu'**un dispositif (19) pour le logement de nanomatériau en carbone produit (13) est prévu dans la zone de sortie (16) de la cuve de réacteur (11).

12. Réacteur selon l'une quelconque des revendications 1 à 11, **caractérisé en ce qu'**au moins l'une des cuves de réacteur (11) est orientée horizontalement.

13. Réacteur selon l'une quelconque des revendications 1 à 12, **caractérisé en ce qu'**au moins l'une des cuves de réacteur (11) est orientée verticalement.

14. Réacteur selon l'une quelconque des revendications 1 à 13, **caractérisé en ce que** le dispositif de transport (40) est réalisé dans au moins l'une des cuves de réacteur (11) pour le transport de matériau au moyen d'un champ magnétique.

15. Réacteur selon la revendication 14, **caractérisé en ce que** le dispositif de transport (40) présente au moins un dispositif magnétique (60), au moyen duquel un champ magnétique mobile (M) peut ou est généré dans ou en dehors de la cuve de réacteur (11).

16. Réacteur selon la revendication 14 ou 15, **caractérisé en ce qu'**une force magnétique définie, liée à un poids prescrit du nanomatériau en carbone (13) produit peut ou est réglée dans le dispositif magnétique (60).

17. Réacteur selon la revendication 16, **caractérisé en ce qu'**une force magnétique modifiée ou modifiable en direction (M) du champ magnétique se déplaçant peut ou est réglée dans le dispositif magnétique (60).

18. Réacteur selon l'une quelconque des revendications 1 à 17, **caractérisé en ce que** le dispositif de transport (40) est réalisé dans au moins l'une des cuves de réacteur (11) comme une boucle de transport tournante.

19. Réacteur selon la revendication 18, **caractérisé en ce que** la boucle de transport est réalisée comme une bande transporteuse (50).

20. Réacteur selon la revendication 19, **caractérisé en ce qu'**un nombre de récipients de logement (54) est disposé sur la bande transporteuse (50).

21. Réacteur selon la revendication 19 ou 20, **caractérisé en ce que** la bande transporteuse (50) se compose d'un matériau présentant de bonnes propriétés adhésives pour le matériau catalyseur (12) et le nanomatériau en carbone produit (13).

22. Réacteur selon l'une quelconque des revendications 1 à 21, **caractérisé en ce que** des moyens (20) pour l'extraction du nanomatériau en carbone produit (13) hors de la cuve de réacteur (11) sont prévus dans la zone de sortie (16) de la cuve de réacteur (11).

23. Réacteur selon la revendication 22, **caractérisé en ce que** les moyens (20) pour l'extraction sont réalisés comme un élément de démoulage et/ou une grille de démoulage.

24. Réacteur selon l'une quelconque des revendications 1 à 23, **caractérisé en ce que** l'entraînement (51) du dispositif de transport (40) est disposé en dehors de la cuve de réacteur (11).

25. Réacteur selon l'une quelconque des revendications 1 à 24, **caractérisé en ce qu'**au moins un dispositif (21) pour la mesure de la composition du gaz de réaction résiduel (30) est prévu dans la zone de sortie (16) de la cuve de réacteur (11).

26. Réacteur selon l'une quelconque des revendications 1 à 25, **caractérisé en ce qu'**au moins une dérivation fluidique (23) pour la dérivation du gaz de réaction résiduel (30) est prévue dans la zone de sortie (16) de la cuve de réacteur (11).

27. Réacteur selon la revendication 26, dans la mesure où relative à l'une quelconque des revendications 3 à 25, **caractérisé en ce que** l'évacuation (17) de la cuve de réacteur (11) est reliée à au moins une dérivation fluidique (23).

28. Réacteur selon la revendication 26 ou 27, **caractérisé en ce qu'**un dispositif (25) pour la génération/préparation de gaz de réaction (18) est prévu dans la dérivation fluidique (23) ou **en ce que** la dérivation fluidique (23) de la cuve de réacteur (11) est reliée au moins temporairement à un dispositif (25) pour la génération/préparation de gaz de réaction (18).

29. Réacteur selon l'une quelconque des revendications 26 à 28, **caractérisé en ce qu'**un dispositif de séparation pour la séparation de composants déterminés du gaz de réaction résiduel (30) est prévu dans la dérivation fluidique (23) ou **en ce que** la dérivation fluidique (23) est reliée au moins temporairement à un tel dispositif de séparation.

30. Réacteur selon l'une quelconque des revendications 1 à 29, **caractérisé en ce qu'**au moins un dispositif (29) pour le réglage d'une température déterminée est prévu pour au moins une cuve de réacteur (11).

31. Procédé de production de nanomatériau dans un réacteur avec au moins une cuve de réacteur, **caractérisé en ce qu'**un matériau catalyseur est introduit dans une zone d'entrée d'au moins une cuve de réacteur dans celle-ci, **en ce que** le matériau catalyseur est transporté au moyen d'un dispositif de transport par la cuve de réacteur, un gaz de réaction se trouvant dans la cuve de réacteur agissant sur le matériau catalyseur, ce qui produit le nanomatériau en carbone et **en ce que** le nanomatériau en carbone produit est prélevé dans la zone de sortie de la cuve de réacteur de celle-ci.

32. Procédé selon la revendication 31, **caractérisé en ce que** celui-ci est réalisé pour la production continue de nanomatériau en carbone.

33. Procédé selon la revendication 31 ou 32, **caractérisé en ce que** celui-ci est réalisé comme un procédé CVD.

34. Procédé selon l'une quelconque des revendications 31 à 33, **caractérisé en ce que** celui-ci est mis en oeuvre dans un réacteur selon l'une quelconque des revendications 1 à 30.
